# EUROPEAN PATENT APPLICATION

(11) **EP 4 733 344 A1**
(43) Date of publication of application: **29.04.2026**
(21) Application number: 24825890.7
(22) Date of filing: 18.06.2024
(51) Int. Cl.: C08G 59/04, C08L 63/00, C08L 71/00

(54) **FLUOROPOLYETHER-BASED CURABLE COMPOSITION, CURED PRODUCT, AND ARTICLE**

(30) Priority: 22.06.2023 JP 2023102411
(71) Applicant: SHIN-ETSU CHEMICAL CO., LTD., Tokyo 100-0005 (JP)
(72) Inventor: HAYASHI Ryuto, Annaka-shi, Gunma 379-0224 (JP); SAKANO Yasunori, Annaka-shi, Gunma 379-0224 (JP)
(74) Representative: Ter Meer Steinmeister & Partner
(86) International application number: PCT/JP2024/022023
(87) International publication number: WO 2024/262489

(57) **Abstract**

Provided is a fluoropolyether-based curable composition containing:
(A) a fluorine-containing compound having at least two secondary amino groups in one molecule and having a divalent perfluoropolyether group in the main chain; and
(B) a fluorine-containing compound having at least two epoxy groups in one molecule and having a monovalent or divalent perfluoropolyether group in the main chain, in an amount such that the epoxy groups in component (B) are 0.5-5 moles per mole of the secondary amino groups in component (A).
This fluoropolyether-based curable composition has a longer pot life than conventional compositions, can be cured at room temperature or by heating, and gives a cured product having reduced hardness and good mechanical properties.

## Description

### TECHNICAL FIELD

This invention relates to a fluoropolyether-based curable composition which cures through reaction of amine with epoxide, which has a longer pot life than in the prior art, which is curable at room temperature or elevated temperature, and which gives a cured product having reduced hardness and satisfactory mechanical properties, a cured product of the composition, and an article comprising the cured product.

### BACKGROUND ART

Fluoropolyether-based curable compositions which utilize addition reaction of alkenyl groups with hydrosilyl groups (SiH groups) are well known. As exemplary curable compositions, Patent Document 1 (JP-A H08-199070) and Patent Document 2 (JP-A 2011-201940) propose compositions comprising a linear fluoropolyether compound containing at least 2 alkenyl groups per molecule and having a perfluoropolyether structure in its backbone, a fluorinated organohydrogensiloxane containing at least 2 silicon-bonded hydrogen atoms per molecule, and a platinum group metal compound. Patent Document 3 (JP-A H09-095615) and Patent Document 4 (JP-A 2011-219692) disclose compositions which are rendered self-adhesive by adding an organopolysiloxane having a hydrosilyl group and an epoxy and/or trialkoxysilyl group to the above-proposed compositions. These compositions can be cured into cured products by heating for a short time. Since the cured products (fluoropolyether cured products) have excellent solvent resistance, chemical resistance, heat resistance, low-temperature properties, moisture permeability and electrical properties, they are used in a variety of industrial fields where such properties are required.

It is known that the fluoropolyether-based curable compositions have the shortcoming that they are under-cured in the presence of materials containing such atoms as phosphorus, sulfur and nitrogen. Because of this shortcoming, they are difficult to use in certain applications. Then a fluoropolyether-based curable composition which is curable even in the presence of these atoms are needed.

Patent Document 5 (JP-A 2008-019398) describes a fluoropolyether-based curable composition wherein cure reaction is incurred by mixing a fluorinated amide compound having a divalent perfluoropolyether group and a secondary amino group with an aniline derivative having 3 epoxy groups. However, the aniline derivative which is free of fluorine atoms is not compatible with the fluorinated amide compound immediately after mixing, and the pot life is as short as about 3 to 8 hours. Even the composition having a short pot life is permissible in some applications where the composition must be cured at room temperature within a short time. However, in the application where cure reaction can be promoted by heating, a long pot life is often favored because there is no need to scarify the pot life for the purpose of reducing the cure time. Because of a strong tendency that the cured product becomes hard, the method of Patent Document 5 is not acceptable in the application where softer cured products having high elasticity are necessary.

Patent Document 6 (JP-A 2014-080534) describes a fluorinated epoxy compound containing a mono- or divalent perfluoropolyether group in its backbone, which is useful as an additive for imparting antifouling properties and water/oil repellency to the surface of thermosetting resins. Little or no study has been made to use the epoxy compound having such characteristics as the epoxy compound in the fluoropolyether-based curable composition of Patent Document 5 in order that the pot life be prolonged and soft elastic cured products be obtained.

### PRIOR ART DOCUMENTS

### PATENT DOCUMENTS

Patent Document 1: JP-A H08-199070
Patent Document 2: JP-A 2011-201940
Patent Document 3: JP-A H09-095615
Patent Document 4: JP-A 2011-219692
Patent Document 5: JP-A 2008-019398
Patent Document 6: JP-A 2014-080534

### SUMMARY OF INVENTION

### TECHNICAL PROBLEM

An object of the invention, which has been made under the above-mentioned circumstances, is to provide a fluoropolyether-based curable composition which has a longer pot life than in the prior art, is curable at room temperature or elevated temperature, and gives a cured product having a reduced hardness and satisfactory mechanical properties, a cured product obtained by curing the composition, which is softer than in the prior art and has excellent rubber elasticity, and an article comprising the cured product.

### SOLUTION TO PROBLEM

Making extensive investigations to attain the above object, the inventors have found that a fluoropolyether-based curable composition comprising (A) a fluorinated compound having at least two secondary amino groups per molecule and containing a divalent perfluoropolyether group in the backbone and (B) a fluorinated compound having at least two epoxy groups per molecule and containing a mono- or divalent perfluoropolyether group in the backbone in a specific ratio has a relatively long pot life and gives a softer cured product having excellent rubber elasticity through room temperature cure or heat cure, and that the cured product has a hardness reduced from that of Patent Document 5 and satisfactory mechanical properties. The invention is predicated on this finding.

Accordingly, the invention provides a fluoropolyether-based curable composition which has a long pot life, is room temperature curable or heat curable, and gives a cured product having satisfactory mechanical properties, a cured product of the composition, and an article comprising the cured product, as defined below.
[1] A fluoropolyether-based curable composition comprising:
   (A) a fluorinated compound having at least two secondary amino groups per molecule and containing a divalent perfluoropolyether group in the backbone, and
   (B) a fluorinated compound having at least two epoxy groups per molecule and containing a mono- or divalent perfluoropolyether group in the backbone, in such an amount as to provide 0.5 to 5 moles of epoxy groups in component (B) per mole of secondary amino groups in component (A).
[2] The fluoropolyether-based curable composition of [1] wherein component (A) is a fluorinated compound having the average formula (1): 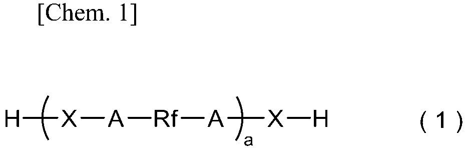 wherein Rf is independently a divalent perfluoropolyether group, A is independently a carbonyl bond, or a C₁-C₁₂ divalent organic group which may contain at least one moiety selected from amide bond, ether bond and ester bond, X is independently a group having any one of the formulae (2) to (4): 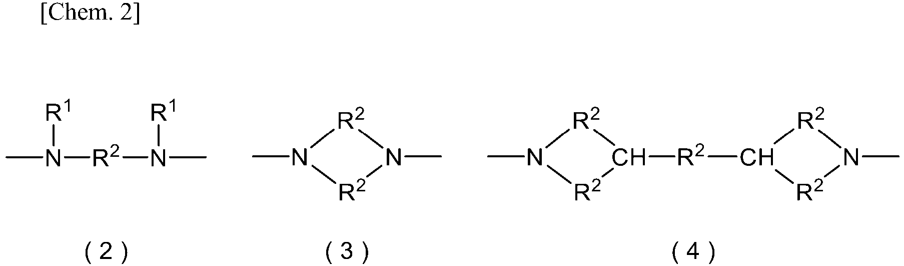 wherein R¹ is independently a substituted or unsubstituted monovalent hydrocarbon group, and R² is independently a substituted or unsubstituted divalent hydrocarbon group, and "a" is a positive number of at least 1.
[3] The fluoropolyether-based curable composition of [2] wherein in average formula (1), A is independently a group selected from -(CH₂)_{f}-*, -(CH₂)_{f}OCH₂-*, -CO-*, -(CH₂)_{f-}NR⁶-CO-*, -(CH₂)_{f}-O-CO-*, and groups having the general formulae (5) and (6): 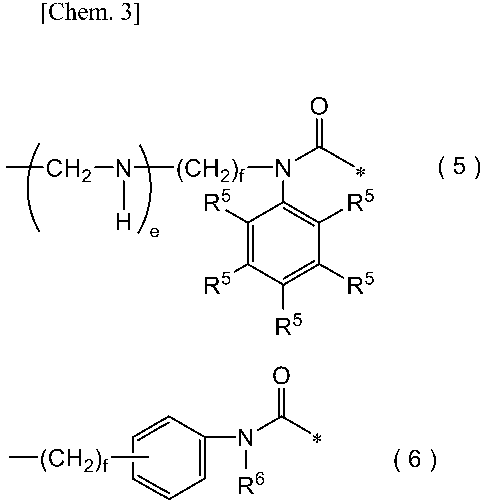 wherein R⁵ is independently hydrogen, fluorine, methyl, ethyl or trifluoromethyl, R⁶ is hydrogen, methyl, ethyl, isopropyl or phenyl, e is 0 or 1, and f is an integer of 1 to 9,
   -* designates a point of attachment to Rf and - designates a point of attachment to X.
[4] The fluoropolyether-based curable composition of any one of [1] to [3] wherein component (B) is a fluorinated compound having the general formula (7): 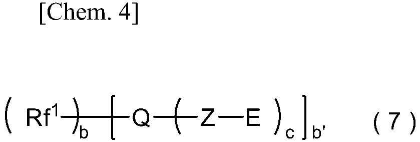 wherein Rf¹ is independently a mono- or divalent group of fluoropolyether structure having a number average molecular weight of 400 to 40,000; when Rf¹ is monovalent, b' is 1, b is an integer of 1 to 6, and c is an integer of 2 to 20; when Rf¹ is divalent, b' is 2, b is 1, and c is an integer of 1 to 20; Q is independently a (b+c)-valent group containing at least (b+c) number of Si atoms, which has a siloxane structure, silalkylene structure, silarylene structure, or a combination thereof, and may have a cyclic structure, Z is independently a C₁-C₂₀ divalent hydrocarbon group which may contain an ether bond or ester bond and may have a cyclic structure, and E is independently a group having the formula (I) or (II): 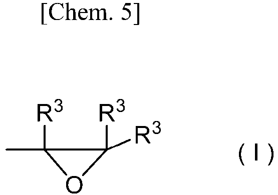 wherein R³ is independently hydrogen or a C₁-C₂₀ substituted or unsubstituted monovalent hydrocarbon group which may contain an ether bond or ester bond and may have a cyclic structure, 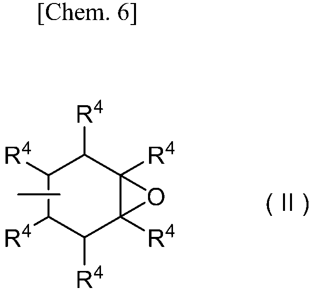 wherein R⁴ is independently hydrogen or a C₁-C₂₀ substituted or unsubstituted monovalent hydrocarbon group.
[5] The fluoropolyether-based curable composition of [4] wherein in formula (7), Z is independently selected from groups of the following formulae:

   -CH₂CH₂-*,

   -CH₂CH₂CH₂-*,

   -CH₂CH₂CH₂CH₂-*,

   -CH₂CH₂CH₂CH₂CH₂-*,

   -CH₂CH₂CH₂CH₂CH₂CH₂-*,

   -CH₂CH₂CH₂CH₂CH₂CH₂CH₂-*,

   -CH₂CH₂CH₂CH₂CH₂CH₂CH₂CH₂-*,

   -CH₂CH₂CH₂OCH₂-*,

   -CH₂CH₂CH₂OCH₂CH₂OCH₂-*, and

   -CH₂CH₂CH₂OCH₂CH₂OCH₂CH₂OCH₂CH₂-*,

   wherein -* designates a point of attachment to E and - designates a point of attachment to Q.
[6] The fluoropolyether-based curable composition of [4] or [5] wherein in formula (7), the structure represented by -Z-E is selected from groups having the formulae (a) to (d): 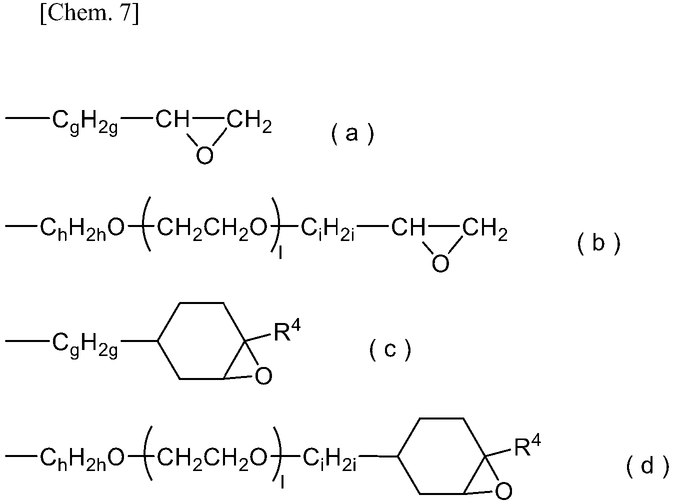 wherein g is an integer of 1 to 20, h is an integer of 1 to 10, i is an integer of 1 to 5, I is an integer of 0 to 9, h+2I+i is 2 to 20, and R⁴ is hydrogen or a C₁-C₂₀ substituted or unsubstituted monovalent hydrocarbon group.
[7] The fluoropolyether-based curable composition of any one of [4] to [6] wherein in formula (7), the structure represented by -Z-E is selected from groups having the following formulae. 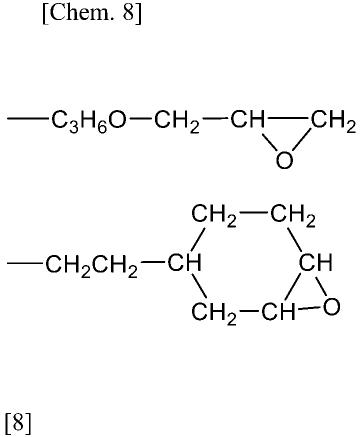
[8]The fluoropolyether-based curable composition of any one of [4] to [7] wherein in formula (7), Q is a group represented by any one of the following formulae: 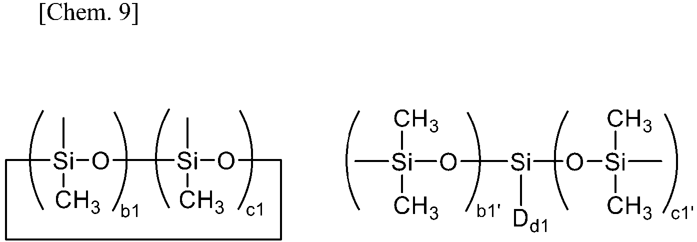 wherein b1 is an integer of 1 to 4 when Rf¹ is monovalent, b1 is 1 when Rf¹ is divalent, c1 is an integer of 2 to 4, bl+cl is an integer of 3 to 6, b1' is 1 or 2 when Rf¹ is monovalent, b1' is 1 when Rf¹ is divalent, c1' is 2 or 3, d1 is 0 or 1, b1'+c1'+d1 = 4, D is a C₁-C₆ monovalent hydrocarbon group, each silicon atom in the units within parentheses having b1 number and b1' number of repetitions is bonded to Rf¹, each silicon atom in the units within parentheses having c1 number and c1' number of repetitions is bonded to Z, and the units within parentheses may be randomly arranged.
[9] A cured product obtained by curing the fluoropolyether-based curable composition of any one of [1] to [8].
[10] An article comprising the cured product of [9].
[11] The article of [10] which is used in automobiles, ships, aircraft, sports goods, LEDs, construction and building applications, chemical plants, analytical and scientific instruments, residential environments, communication tools, communication systems, and railroad vehicles.

### ADVANTAGEOUS EFFECTS OF INVENTION

The fluoropolyether-based curable composition comprising a fluorinated compound having at least two secondary amino groups per molecule and containing a divalent perfluoropolyether group in the backbone as component (A) and a fluorinated compound having at least two epoxy groups per molecule and containing a mono- or divalent perfluoropolyether group in the backbone as component (B) which is reactive with the amino group in component (A) in a specific ratio has a pot life which is improved over the curable composition of Patent Document 5. When the composition is cured, the cured product is softer than that of Patent Document 5 and excellent rubber elasticity as well as satisfactory chemical resistance, solvent resistance and insulating properties.

### DESCRIPTION OF EMBODIMENTS

Now the invention is described in further detail.

### [Component (A)]

Component (A) used in the fluoropolyether-based curable composition is a fluorinated compound (fluorine-containing compound) having at least two secondary amino groups per molecule and containing a divalent perfluoropolyether group in the backbone. It serves as a main component or base oil in the fluoropolyether-based curable composition.

Herein, the degree of polymerization or molecular weight of the fluorinated compound, which reflects the number of repeating perfluorooxyalkylene units of which the perfluoropolyether group in the backbone is composed, can be determined, for example, as a number average degree of polymerization or number average molecular weight by gel permeation chromatography (GPC) versus polystyrene standards using a fluorinated solvent as developing solvent. Also, the number average degree of polymerization or number average molecular weight of the perfluoropolyether group (represented by Rf or Rf¹) which is composed of repeating perfluorooxyalkylene units in the backbone can be computed from ¹⁹F-NMR spectroscopy.

Component (A) is preferably a fluorinated compound having the average formula (1).

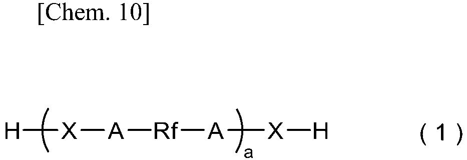

In formula (1), Rf is independently a divalent perfluoropolyether group, A is independently a carbonyl bond, or a C₁-C₁₂ divalent organic group which may contain at least one moiety selected from amide bond, ether bond and ester bond, X is independently a group having any one of the formulae (2) to (4): 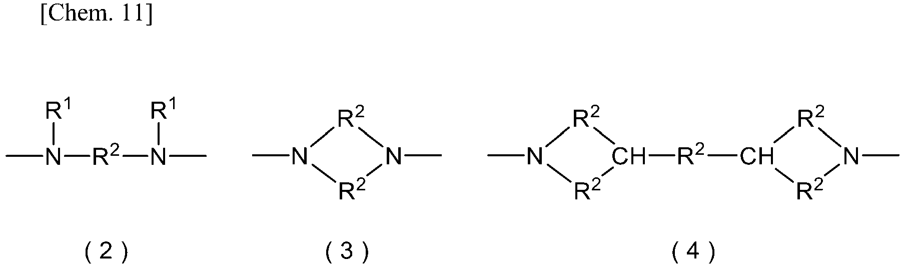 wherein R¹ is independently a substituted or unsubstituted monovalent hydrocarbon group, and R² is independently a substituted or unsubstituted divalent hydrocarbon group, and "a" is a positive number of at least 1.

In average formula (1), X is independently a group having any one of the formulae (2) to (4): 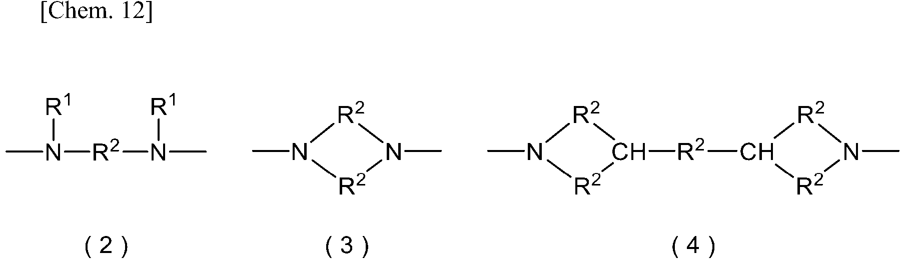 wherein R¹ is independently a substituted or unsubstituted monovalent hydrocarbon group, and R² is independently a substituted or unsubstituted divalent hydrocarbon group.

In formula (2), R¹ is a substituted or unsubstituted monovalent hydrocarbon group of preferably 1 to 12 carbon atoms, more preferably 1 to 8 carbon atoms. Examples thereof include alkyl groups such as methyl, ethyl, propyl, butyl, hexyl, octyl and decyl; cycloalkyl groups such as cyclopentyl, cyclohexyl and cycloheptyl; aryl groups such as phenyl, tolyl and naphthyl; aralkyl groups such as benzyl and phenylethyl; and the foregoing groups in which some hydrogen is substituted by a halogen atom, e.g., fluorine, chlorine or bromine, such as chloromethyl, bromoethyl, chloropropyl, trifluoropropyl, and 3,3,4,4,5,5,6,6,6- nonafluorohexyl.

In formulae (2) to (4), R² is a substituted or unsubstituted divalent hydrocarbon group of preferably 1 to 12 carbon atoms, more preferably 2 to 6 carbon atoms. Examples thereof include alkylene groups such as methylene, ethylene, n-propylene, i-propylene, butylene, and hexamethylene; cycloalkylene groups such as cyclohexylene; arylene groups such as phenylene, tolylene, xylylene, naphthylene and biphenylene; and the foregoing groups in which some hydrogen is substituted by a halogen atom, e.g., fluorine.

The following groups are exemplary of X. Herein Me stands for methyl and Ph for phenyl.

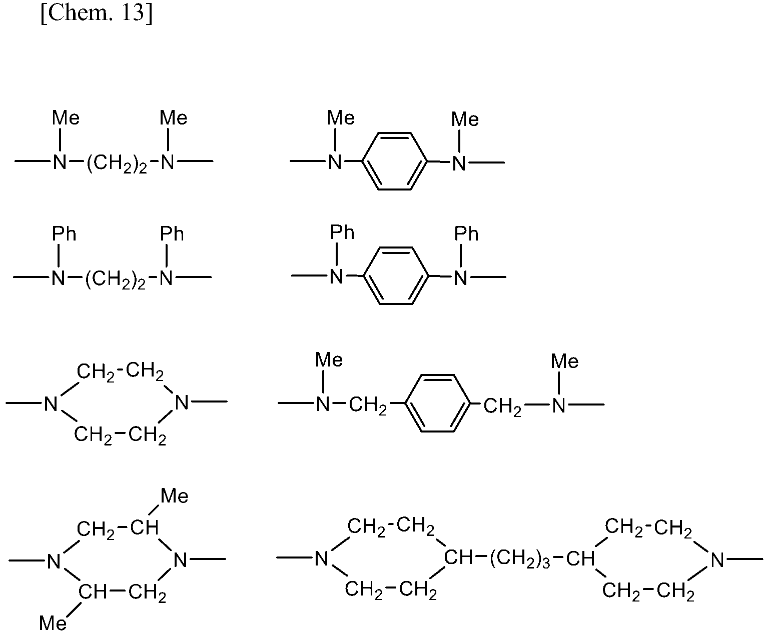

In average formula (1), "A" is independently a carbonyl bond, or a divalent organic group, especially hydrocarbon group, of 1 to 12 carbon atoms, preferably 1 to 10 carbon atoms which may contain at least one moiety selected from amide bond, ether bond and ester bond. A is preferably a group selected from -(CH₂)_{f}-*, -(CH₂)_{f}OCH₂-*, -CO-*, -(CH₂)_{f-}NR⁶-CO-*, -(CH₂)_{f}-O-CO-*, and groups having the general formulae (5) and (6): 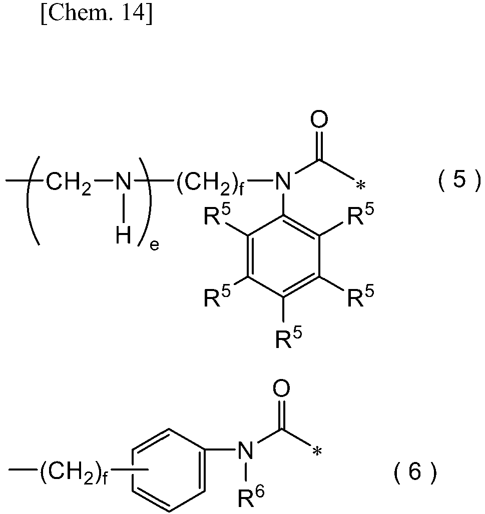 wherein R⁵ is independently hydrogen, fluorine, methyl, ethyl or trifluoromethyl, R⁶ is hydrogen, methyl, ethyl, isopropyl or phenyl, e is 0 or 1, and f is an integer of 1 to 9, the asterisked hyphen (-*) designates a point of attachment to Rf and the simple hyphen (-) designates a point of attachment to X.

Examples of "A" include -CH₂-*, -CH₂CH₂CH₂-*, -OCH₂-*, -CH₂OCH₂-*, -(CH₂)₂OCH₂-*, -(CH₂)₃OCH₂-*, -CO-*, -CH₂-NH-CO-*, -CH₂-N(CH₃)-CO-*, -CH₂-N(CH₂CH₃)-CO-*, -CH₂CH₂-NH-CO-*, -(CH₂)₃-NH-CO-*, -(CH₂)₃-N(CH₃)-CO-*, -(CH₂)₃-N(CH₂CH₃)-CO-*, -(CH₂)₃-N(CH(CH₃)₂)-CO-*, -(CH₂)₂-O-CO-*, -(CH₂)₃-O-CO-, groups having the general formulae (5A), (5B), (5C), (5D), (5E), (6A), (6B), and (6C). Of these, preference is given to -CO-*, -CH₂-NH-CO-*, -CH₂CH₂-NH-CO-*, and groups having formulae (5A) and (6A). It is noted that -* designates a point of attachment to Rf and - designates a point of attachment to X. In the formulae, Me stands for methyl and Et for ethyl.

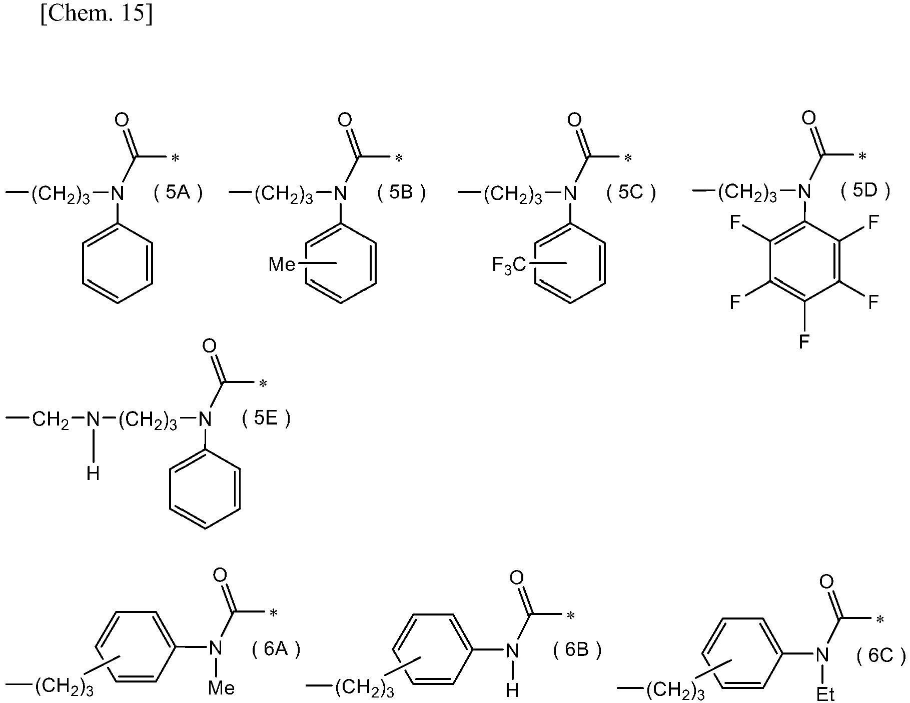

In average formula (1), Rf is independently a divalent perfluoropolyether group, typically a group containing repeating units of the formula: -CₓF₂ₓO- wherein x is an integer of 1 to 6, for example, a group having the formula (8):

-(CₓF₂ₓO)_{y}- (8)

wherein x is an integer of 1 to 6, y is an integer of 5 to 600, preferably 10 to 400, more preferably 30 to 200.

Examples of the repeating unit of the formula: -CₓF₂ₓO- include units having the following formulae.

-CF₂O-

-CF₂CF₂O-

-CF₂CF₂CF₂O-

-CF(CF₃)CF₂O-

-CF₂CF₂CF₂CF₂O-

-CF₂CF₂CF₂CF₂CF₂CF₂O-

Of these, the units of the following formulae are preferred.

-CF₂O-

-CF₂CF₂O-

-CF₂CF₂CF₂O-

-CF(CF₃)CF₂O-

It is noted that the repeating units in the divalent perfluoropolyether group may be units of one type or units of two or more types.

As the divalent perfluoropolyether group, the following structures are preferred.

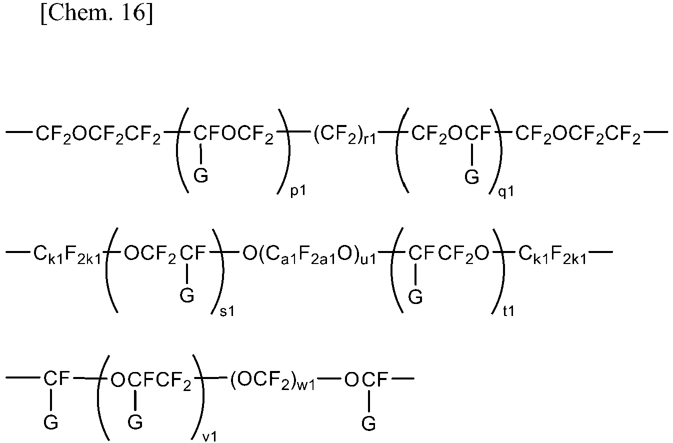

-CF₂CF₂-(OCF₂CF₂CF₂)_{z1}-OCF₂CF₂-

-C_{k1'}F_{2k1'}-(OC_{a1'}F_{2a1'}-OC_{a1"}F_{2a1"})_{z1'}-OC_{k1'}F_{2k1'}-

Herein, G is fluorine or trifluoromethyl, p1, q1 and r1 are integers meeting: p1 ≥ 0, q1 ≥ 0, 0 ≤ p1+q1 ≤ 200, especially 2 ≤ p1+q1 ≤ 150, and 0 ≤ r1 ≤ 6, and 1 ≤ r1 ≤ 6 when p1+q1=0; k1, a1, s1, t1 and u1 are integers meeting: 1 ≤ k1 ≤ 3, 2 ≤ a1 ≤ 6, 0 ≤ s1 ≤ 100, 0 ≤ t1 ≤ 100, 2 ≤ s1+t1 ≤ 200, and 0 ≤ u1 ≤ 6, especially 2 ≤ s1+t1 ≤ 150, 0 ≤ u1 ≤ 4, and 2 ≤ s1+t1+u1 ≤ 150; v1 and w1 are integers meeting: 1 ≤ v1 ≤ 100, 1 ≤ w1 ≤ 100 and 2 ≤ v1+w1 ≤ 200; z1 is an integer meeting 1 ≤ z1 ≤ 200; k1', a1' and a1" are integers meeting 1 ≤ k1' ≤ 3, 1 ≤ a1' ≤ 6, 1 ≤ a1" ≤ 6, and a1' is unequal to a1"; z1' is an integer meeting 1 ≤ z1' ≤ 200. The repeating units within parentheses with v1 and w1 may be randomly arranged.

In average formula (1), examples of Rf include groups of the following formulae.

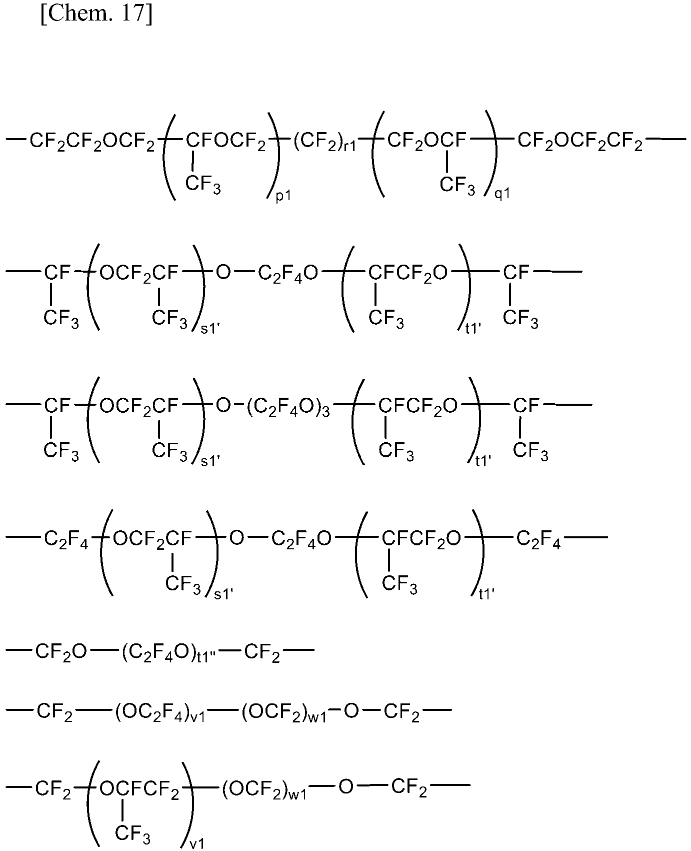

-CF₂CF₂-(OCF₂CF₂CF₂)_{z1}-OCF₂CF₂-

-CF₂CF₂O-(C₂F₄O)_{t1"}-CF₂CF₂-

-CF₂-(OC₂F₄OC₄F₈)_{z1'}-OCF₂-

Herein p1, q1, r1, v1, w1, z1, and z1' are as defined above; s1' and t1' each are an integer of 1 to 100 and s1'+t1' is an integer of 2 to 200; t1" is an integer of 2 to 100. The repeating units within parentheses with v1 and w1 may be randomly arranged.

In average formula (1), "a" is a positive number of at least 1, preferably 1 to 3, more preferably 1 to 2. From the molecular aspect, the fluorinated compound having average formula (1), wherein "a" is an integer of at least 1, preferably 1 to 3, more preferably 1 or 2, may be a mixture of two or more compounds having different values of "a" indicative of the number of repeating structures -[X-A-Rf-A]- in the backbone as long as "a" is a positive number of at least 1 in the average formula of overall component (A).

Preferred examples of the fluorinated compound having average formula (1) include those of the following formulae. Herein Me stands for methyl and Et for ethyl.

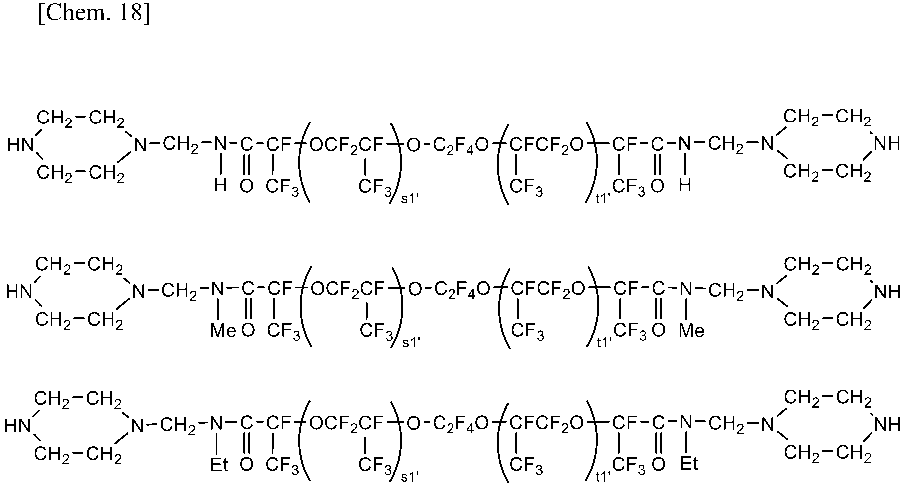

Herein s1' and t1' each are an integer of 1 to 100, and s1'+t1' is an integer of 2 to 200.

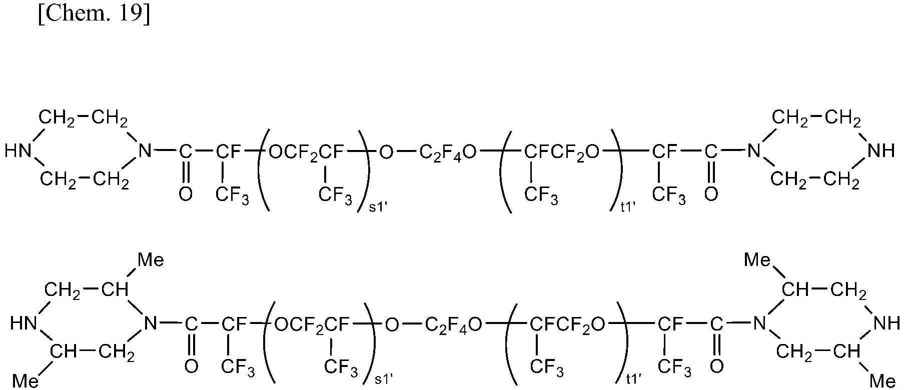

Herein s1' and t1' each are an integer of 1 to 100, and s1'+t1' is an integer of 2 to 200.

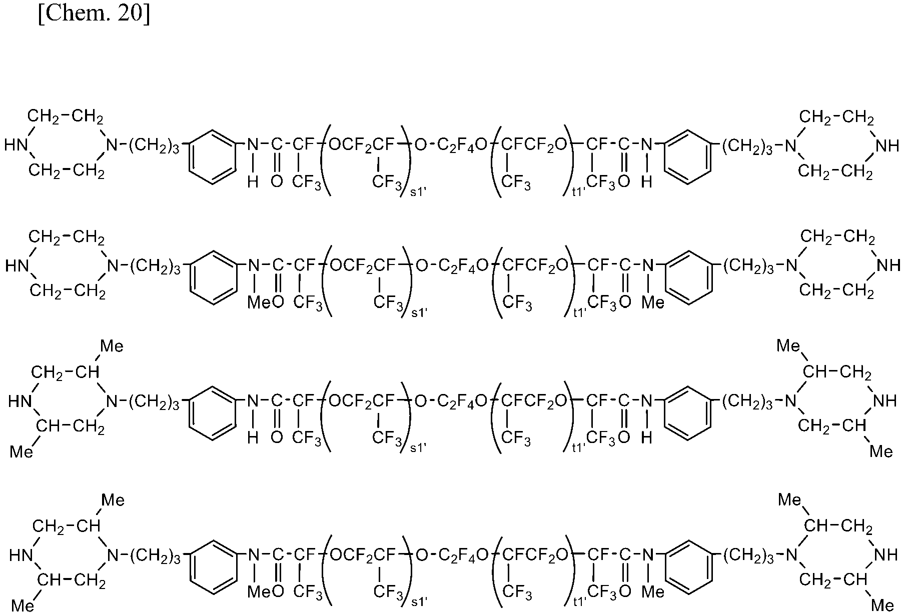

Herein s1' and t1' each are an integer of 1 to 100, and s1'+t1' is an integer of 2 to 200.

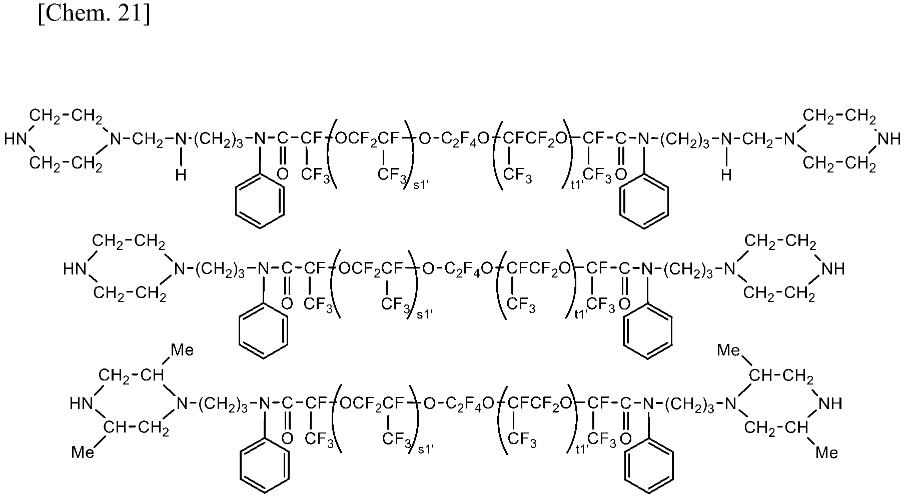

Herein s1' and t1' each are an integer of 1 to 100, and s1'+t1' is an integer of 2 to 200.

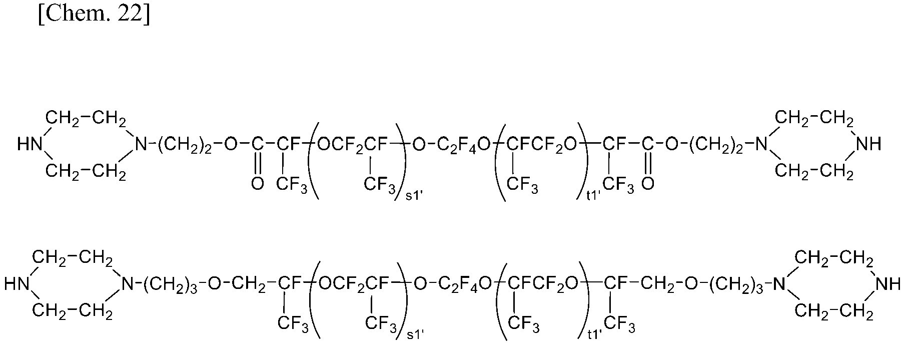

Herein s1' and t1' each are an integer of 1 to 100, and s1'+t1' is an integer of 2 to 200.

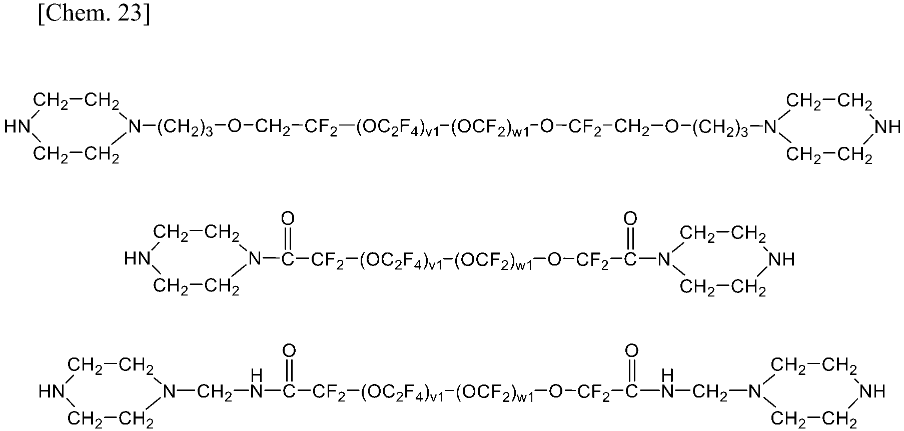

Herein v1 and w1 each are an integer of 1 to 100, and v1+w1 is an integer of 2 to 200. The repeating units within parentheses with v1 and w1 may be randomly arranged.

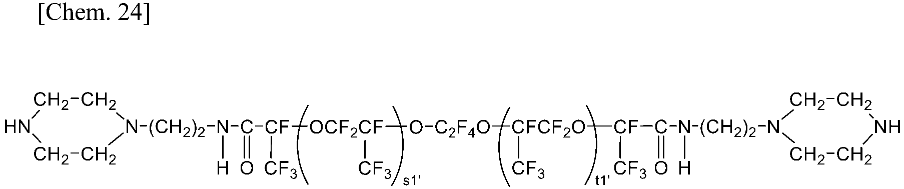

Herein s1' and t1' each are an integer of 1 to 100, and s1'+t1' is an integer of 2 to 200.

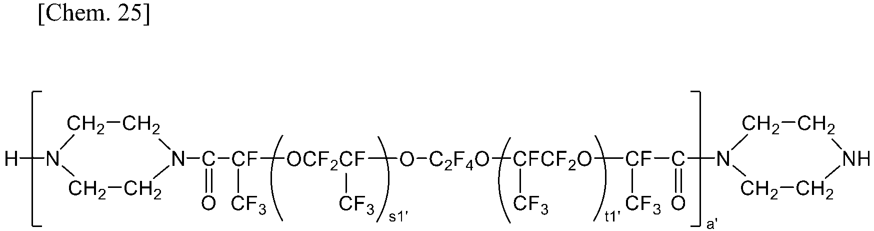

Herein s1' and t1' each are an integer of 1 to 100, s1'+t1' is an integer of 2 to 200, and a' is a positive number of more than 1.

In the fluorinated compound as component (A), the content of secondary amino group is preferably 0.002 to 0.4 mol/100 g, more preferably 0.008 to 0.3 mol/100 g. If the content of secondary amino group in the fluorinated compound is less than 0.002 mol/100 g, undesirably there is a possibility that the crosslinking degree is insufficient and a cure failure occurs. If the content of secondary amino group exceeds 0.4 mol/100 g, undesirably there is a possibility that the cured product is degraded in mechanical properties as rubber elastomer. Herein, the content of secondary amino group can be measured by ¹H-NMR spectroscopy.

The fluorinated compound as component (A) should preferably have a viscosity at 23°C of 40 to 500,000 mPa·s, more preferably 50 to 300,000 mPa·s, even more preferably 60 to 150,000 mPa·s, because a cured product of the fluoropolyether-based curable composition has appropriate physical properties. From the above-specified viscosity range, a viscosity which is most appropriate for a particular application can be selected. Herein, the viscosity can be measured at 23°C by a rotational viscometer, for example, BL, BH, BS or cone-plate viscometer or rheometer.

As component (A), the foregoing fluorinated compounds may be used alone or in admixture of two or more.

### [Component (B)]

Component (B) in the fluoropolyether-based curable composition is a fluorinated compound (also referred to as fluorinated epoxy compound) containing at least 2 epoxy groups per molecule and having a mono- or divalent perfluoropolyether group in the backbone, preferably a fluorinated compound having the general formula (7). It serves as a chain extender and crosslinker in the fluoropolyether-based curable composition.

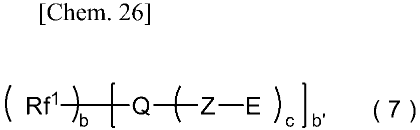

In formula (7), Rf¹ is independently a mono- or divalent group of fluoropolyether structure having a number average molecular weight of 400 to 40,000. When Rf¹ is monovalent, b' is 1, b is an integer of 1 to 6, and c is an integer of 2 to 20. When Rf¹ is divalent, b' is 2, b is 1, and c is an integer of 1 to 20. Q is independently a (b+c)-valent group containing at least (b+c) number of Si atoms, which has a siloxane structure, silalkylene structure, silarylene structure, or a combination thereof, and may have a cyclic structure. Z is independently a C₁-C₂₀ divalent hydrocarbon group which may contain an ether bond or ester bond and may have a cyclic structure. E is independently a group having the formula (I) or (II).

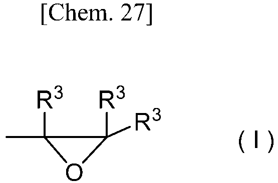

In formula (I), R³ is independently hydrogen or a C₁-C₂₀ substituted or unsubstituted monovalent hydrocarbon group which may contain an ether bond or ester bond and may have a cyclic structure.

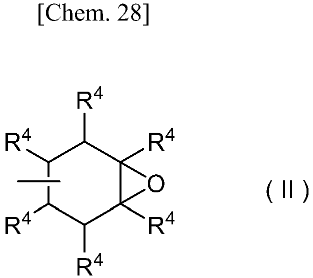

In formula (II), R⁴ is independently hydrogen or a C₁-C₂₀ substituted or unsubstituted monovalent hydrocarbon group.

In formula (7), when Rf¹ is monovalent, b' is 1, b is an integer of 1 to 6, preferably 1 to 4, more preferably 1, and c is an integer of 2 to 20, preferably 2 to 6, more preferably 2 to 4.

When Rf¹ is divalent, b' is 2, b is 1, and c is an integer of 1 to 20, preferably 1 to 6, more preferably 2 to 4.

Further preferably, b and c are integers meeting b+c = 3 to 6.

In formula (7), E is independently a group having the formula (I) or (II).

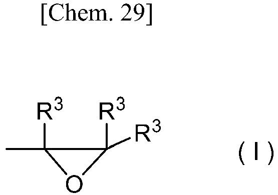

In formula (I), R³ is independently hydrogen or a C₁-C₂₀ substituted or unsubstituted monovalent hydrocarbon group which may contain an ether bond or ester bond and may have a cyclic structure.

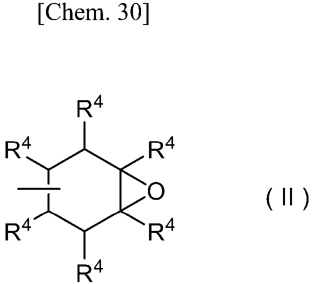

In formula (II), R⁴ is independently hydrogen or a C₁-C₂₀ substituted or unsubstituted monovalent hydrocarbon group.

In formula (I), R³ is independently hydrogen or a substituted or unsubstituted monovalent hydrocarbon group of 1 to 20 carbon atoms, preferably 1 to 10 carbon atoms, more preferably 1 to 8 carbon atoms, which may contain an ether bond or ester bond and may have a cyclic structure. Examples of the monovalent hydrocarbon group include alkyl groups such as methyl, ethyl, propyl, isopropyl, butyl, isobutyl, tert-butyl, hexyl, octyl and decyl; alkenyl groups such as vinyl, allyl, propenyl, butenyl and hexenyl; and cycloalkyl groups such as cyclopentyl and cyclohexyl. Also included are the foregoing hydrocarbon groups in which some or all hydrogen is substituted by a halogen atom, e.g., chlorine, fluorine or bromine, specifically halogenated monovalent hydrocarbon groups such as fluoromethyl, bromoethyl and trifluoropropyl. R³ is preferably hydrogen.

In formula (II), R⁴ is independently hydrogen or a substituted or unsubstituted monovalent hydrocarbon group of 1 to 20 carbon atoms, preferably 1 to 10 carbon atoms, more preferably 1 to 8 carbon atoms. Examples of the monovalent hydrocarbon group include alkyl groups such as methyl, ethyl, propyl, isopropyl, butyl, isobutyl, tert-butyl, hexyl, octyl and decyl; and alkenyl groups such as vinyl, allyl, propenyl, butenyl and hexenyl. Also included are the foregoing hydrocarbon groups in which some or all hydrogen is substituted by a halogen atom, e.g., chlorine, fluorine or bromine, specifically halogenated monovalent hydrocarbon groups such as fluoromethyl, bromoethyl and trifluoropropyl. R⁴ is preferably hydrogen or methyl.

Examples of the structure having formula (I) or (II) are given below.

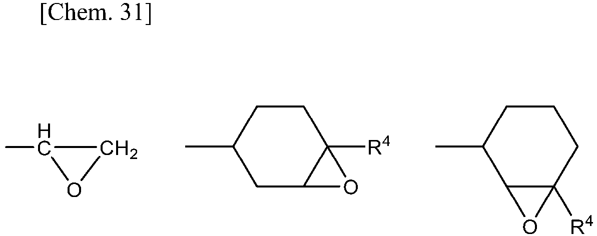

Herein R⁴ is as defined above.

The following structures are preferred.

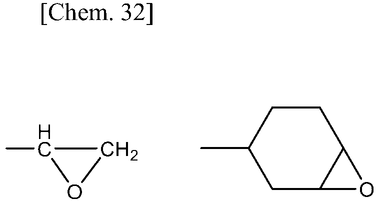

In formula (7), Z is a divalent hydrocarbon group of 1 to 20 carbon atoms, preferably 2 to 15 carbon atoms which may form a cyclic structure and may contain an ether bond (-O-) or ester bond (-COO-) therein.

The following structures are exemplary of Z. Herein, -* designates a point of attachment to E and - designates a point of attachment to Q.

-CH₂CH₂-*,

-CH₂CH₂CH₂-*,

-CH₂CH₂CH₂CH₂-*,

-CH₂CH₂CH₂CH₂CH₂-*,

-CH₂CH₂CH₂CH₂CH₂CH₂-*,

-CH₂CH₂CH₂CH₂CH₂CH₂CH₂-*,

-CH₂CH₂CH₂CH₂CH₂CH₂CH₂CH₂-*,

-CH₂CH₂CH₂OCH₂-*,

-CH₂CH₂CH₂OCH₂CH₂OCH₂-*,

and

-CH₂CH₂CH₂OCH₂CH₂OCH₂CH₂OCH₂CH₂-*

Examples of the structure represented by -Z-E include those having the formulae (a) to (d).

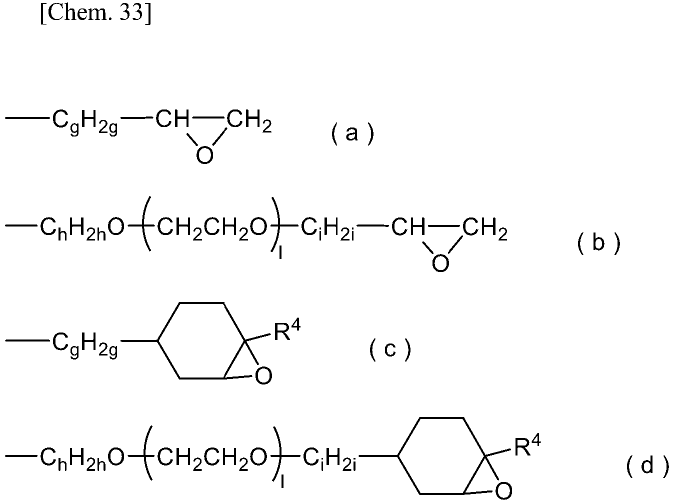

In the above formulae, g is an integer of 1 to 20, preferably 2 to 15, h is an integer of 1 to 10, i is an integer of 1 to 5, I is an integer of 0 to 9, and h+2I+i is 2 to 20, preferably h is an integer of 1 to 6, i is 1 or 2, I is an integer of 0 to 4, and h+2I+i is 2 to 15. R⁴ is as defined above, preferably hydrogen or methyl.

Most preferred examples of the structure represented by -Z-E are shown below.

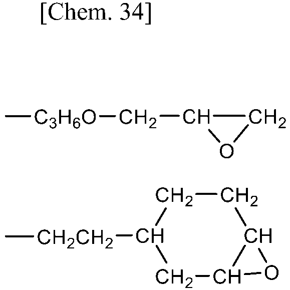

In formula (7), Q is independently a (b+c)-valent group containing at least (b+c) number of Si atoms, which has a siloxane structure, silalkylene structure, silarylene structure, or a combination thereof, and may have a cyclic structure.

The following structures are exemplary of Q.

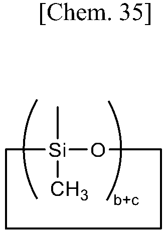

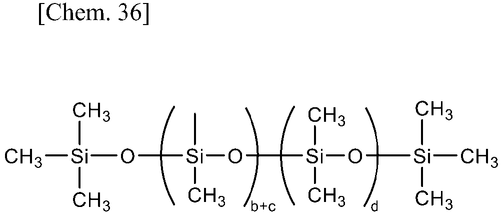

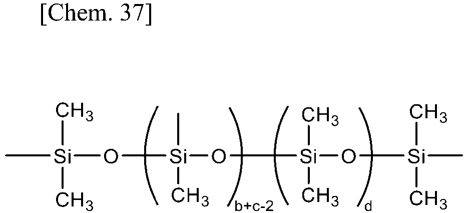

Herein, b and c are as defined above, d is an integer of at least 0, preferably 0 to 10, more preferably 0 to 6. Each silicon atom in the unit within parentheses having a repetition number of b is bonded to Rf¹. Each silicon atom in the unit within parentheses having a repetition number of c is bonded to Z. The units within parentheses may be randomly arranged.

Also, Q may be a group having the following formula.

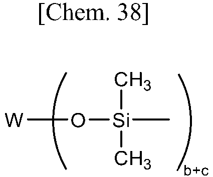

Herein, b and c are as defined above. Each silicon atom in the unit within parentheses having a repetition number of b is bonded to Rf¹. Each silicon atom in the unit within parentheses having a repetition number of c is bonded to Z. W is silicon or a (b+c)-valent group having a siloxane, silalkylene or silarylene structure or a mixture thereof.

The following structures are exemplary of W.

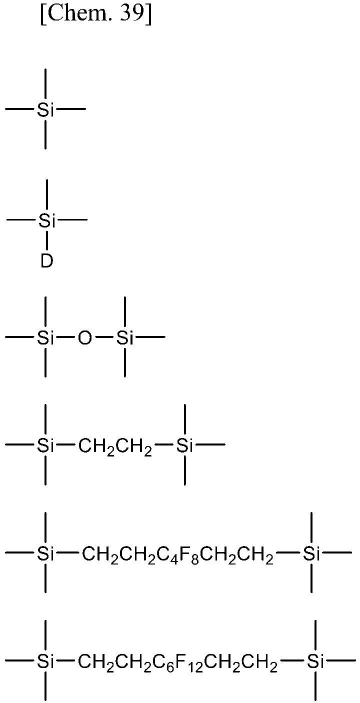

Herein D is a C₁-C₆ monovalent hydrocarbon group, typically alkyl group such as methyl, ethyl or propyl.

The following structures are exemplary of Q.

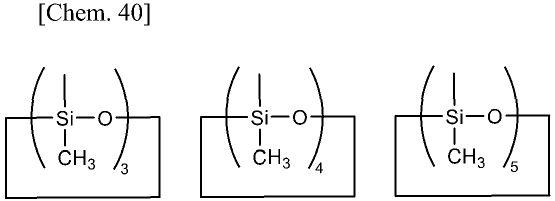

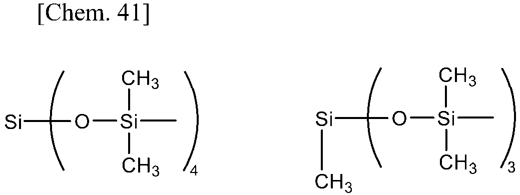

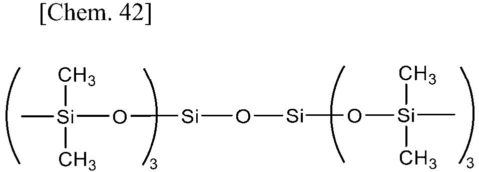

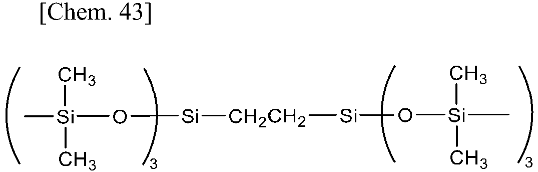

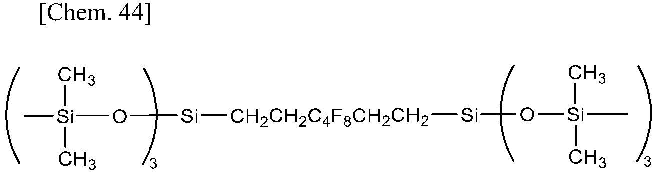

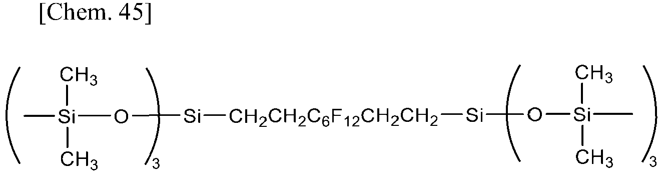

Of the groups Q, the following structures are especially preferred.

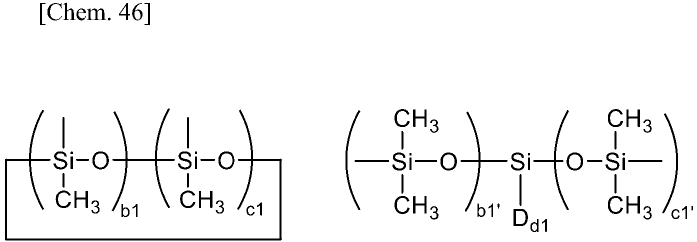

Herein, b1 is an integer of 1 to 4, preferably 1, when Rf¹ is monovalent, b1 is 1 when Rf¹ is divalent, c1 is an integer of 2 to 4, and b1+c1 is an integer of 3 to 6; b1' is 1 or 2, preferably 1, when Rf¹ is monovalent, b1' is 1 when Rf¹ is divalent, c1' is 2 or 3, d1 is 0 or 1, and b1'+c1'+d1 = 4. D is a C₁-C₆ monovalent hydrocarbon group. Each silicon atom in the unit within parentheses having a repetition number of b1 or b1' is bonded to Rf¹. Each silicon atom in the unit within parentheses having a repetition number of c1 or c1' is bonded to Z. The units within parentheses may be randomly arranged.

In formula (7), Rf¹ is independently a mono- or divalent group of fluoropolyether structure having a number average molecular weight of 400 to 40,000. The number average molecular weight of Rf¹ is preferably 500 to 20,000. The number average molecular weight of Rf¹ can be computed from the sum of the number average molecular weight of repeating structure of perfluoroxyalkylene units in Rf¹ calculated from ¹⁹F-NMR and the molecular weight of the linking group in Rf¹. The number average molecular weight of the overall compound as component (B) can be computed from a ratio of terminal structure and backbone structure (Rf¹) based on ¹H-NMR and ¹⁹F-NMR.

In particular, Rf¹ preferably contains 1 to 500, more preferably 2 to 400, even more preferably 4 to 200 repeating units having the formula:

-CₓF₂ₓO-

wherein x is an integer of 1 to 6. The repeating unit may be branched.

Examples of the repeating unit: -CₓF₂ₓO- include units of the following formulae.

-CF₂O-

-CF₂CF₂O-

-CF₂CF₂CF₂O-

-CF(CF₃)CF₂O-

-CF₂CF(CF₃)O-

-CF₂CF₂CF₂CF₂O-

-CF₂CF₂CF₂CF₂CF₂O-

-CF₂CF₂CF₂CF₂CF₂CF₂O-

Rf¹ may contain repeating units of one type or in combination of two or more types.

The preferred structure of the monovalent group Rf¹ has the general formula (9):

Rf"-V- (9)

wherein Rf" is a monovalent perfluoropolyether group having a number average molecular weight of 300 to 30,000, and V is a C₂-C₂₀ divalent organic group which may contain at least one atom selected from oxygen, nitrogen, fluorine and silicon, may have a cyclic structure, and may contain an unsaturated bond.

The preferred structure of the divalent group Rf¹ has the general formula (10):

-[V-Rf'-V-T]_{z}-V-Rf'-V- (10)

wherein Rf' is a divalent perfluoropolyether group having a number average molecular weight of 300 to 30,000, V is independently as defined above, T is a divalent group having the formula (11): 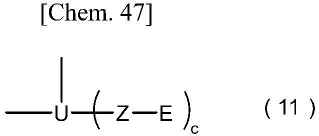 wherein Z, E and c are as defined above, U is a (c+2)-valent group containing at least (c+2) number of silicon atoms which has a siloxane, silalkylene or silarylene structure or a mixture thereof and may have a cyclic structure, and z is an integer of 0 to 5.

In formula (9), Rf" is a monovalent perfluoropolyether group having a number average molecular weight of 300 to 30,000, especially 500 to 20,000. One exemplary perfluoropolyether group is a monovalent group which contains repeating units: -CₓF₂ₓO- and may be branched midway.

Typical of Rf" are monovalent perfluoropolyether groups having the following formulae.

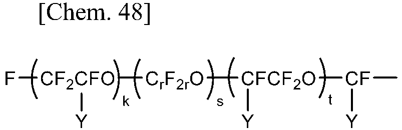

Herein Y is independently F or CF₃ group, r is an integer of 2 to 6, k and t each are an integer of 0 to 200, preferably 0 to 100, k+t is from 2 to 200, preferably from 3 to 150, and s is an integer of 0 to 6. The units within parentheses may be randomly arranged.

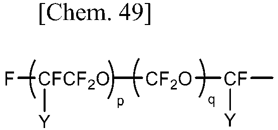

Herein Y is independently F or CF₃ group, p and q each are an integer of 0 to 200, preferably 2 to 100, and p+q is from 2 to 300, preferably from 4 to 200. The units within parentheses may be randomly arranged.

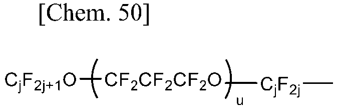

Herein j is an integer of 1 to 3, and u is an integer of 1 to 200, preferably 1 to 60.

In formula (10), Rf' is a divalent perfluoropolyether group having a number average molecular weight of 300 to 30,000, preferably 500 to 20,000. One exemplary perfluoropolyether group is a divalent group which has repeating units -CₓF₂ₓO- and may be branched midway.

Typical of Rf' are divalent perfluoropolyether groups having the following formulae.

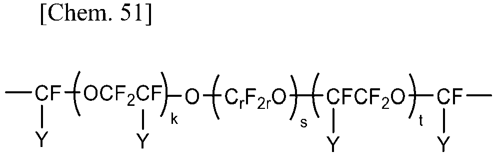

Herein Y is independently F or CF₃ group, r is an integer of 2 to 6, k and t each are an integer of 0 to 200, preferably 0 to 100, k+t is from 2 to 200, preferably from 3 to 150, and s is an integer of 0 to 6.

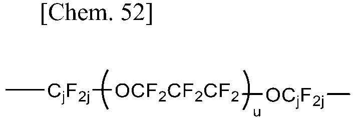

Herein j is an integer of 1 to 3, and u is an integer of 1 to 200, preferably 1 to 60.

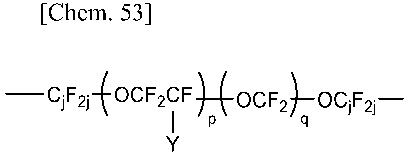

Herein Y is independently F or CF₃ group, j is an integer of 1 to 3, p and q each are an integer of 0 to 200, preferably 2 to 100, and p+q is from 2 to 300, preferably from 4 to 200. The repeating units within parentheses may be randomly arranged.

In formulae (9) and (10), V is independently a divalent organic group, typically hydrocarbon group of 2 to 20 carbon atoms, preferably 2 to 10 carbon atoms which may contain at least one atom selected from oxygen, nitrogen, fluorine and silicon, may have a cyclic structure, and may contain an unsaturated bond.

The following groups are exemplary of V. Herein Ph stands for phenyl, and *-designates a point of attachment to Rf" or Rf'.

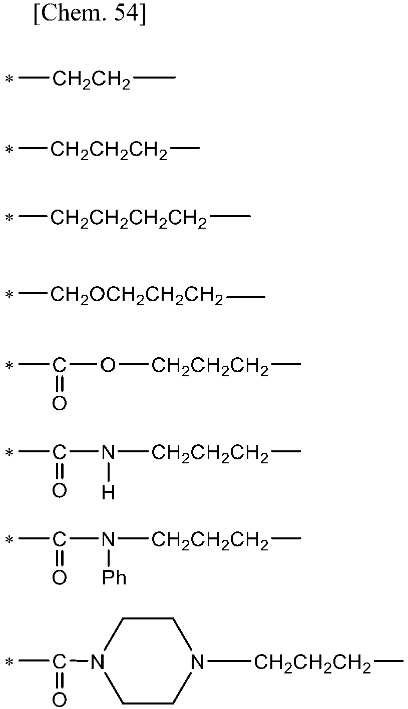

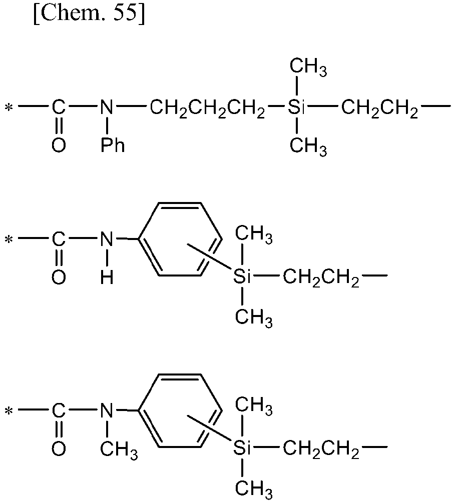

The following structures are more preferred. Herein Ph stands for phenyl, and *-designates a point of attachment to Rf" or Rf'.

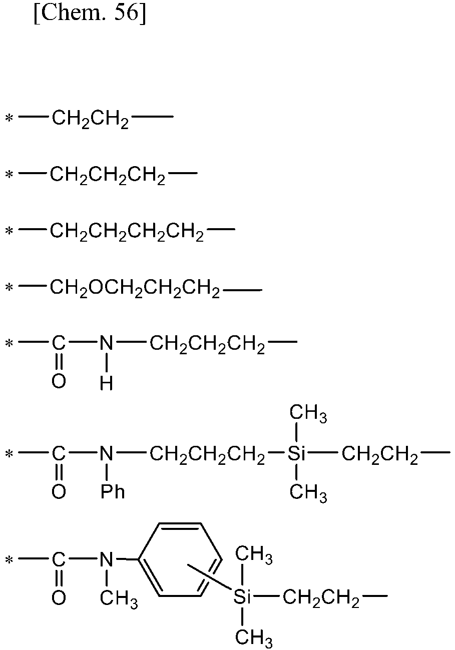

In formula (10), T is a divalent group having the formula (11).

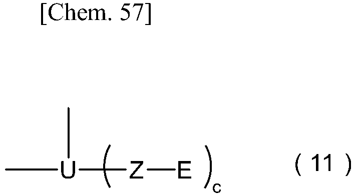

Herein Z, E and c are as defined above. U is a (c+2)-valent group containing at least (c+2) number of silicon atoms which has a siloxane, silalkylene or silarylene structure or a mixture thereof and may have a cyclic structure. Two valence bonds in formula (11) are bonded to different V in formula (10).

In formula (11), U is a (c+2)-valent group containing at least (c+2) number of silicon atoms which has a siloxane, silalkylene or silarylene structure or a mixture thereof and may have a cyclic structure.

The following structures are exemplary of U.

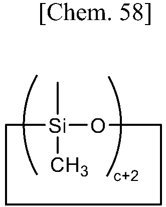

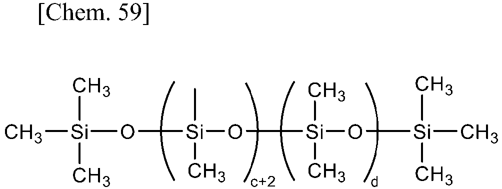

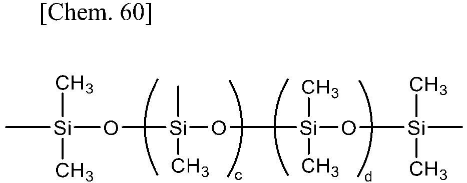

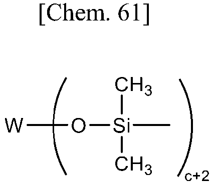

Herein c, d and W are as defined above. Each silicon atom in the units within parentheses having c number of repetitions is bonded to Z in formula (11). Each silicon atom in the units within parentheses having two repetitions is bonded to different V in formula (10). The units within parentheses may be randomly arranged.

Of the groups U, the following structure is most preferred.

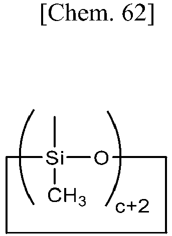

Herein c is as defined above. Each silicon atom in the units within parentheses having c number of repetitions is bonded to Z in formula (11). Each silicon atom in the units within parentheses having two repetitions is bonded to different V in formula (10).

In formula (10), z is an integer of 0 to 5, preferably 0.

Exemplary of monovalent Rf¹ are groups of the following formulae.

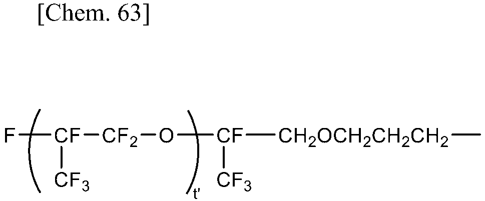

Herein t' is an integer of 2 to 200, preferably 2 to 100.

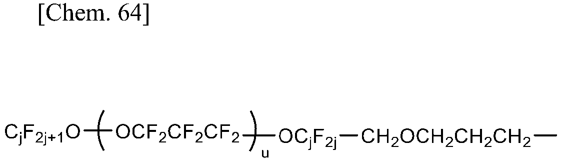

Herein j is an integer of 1 to 3, and u is an integer of 1 to 200, preferably 1 to 60.

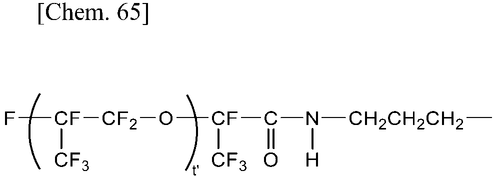

Herein t' is an integer of 2 to 200, preferably 2 to 100.

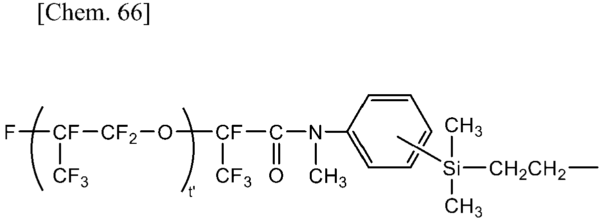

Herein t' is an integer of 2 to 200, preferably 2 to 100.

Exemplary of divalent Rf¹ are groups of the following formulae.

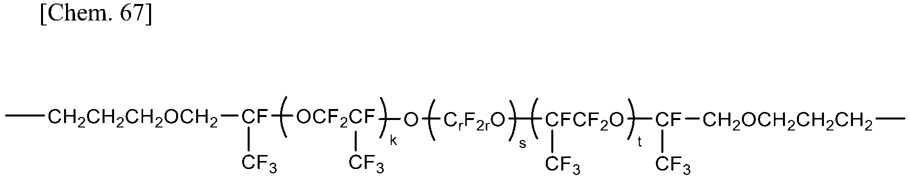

Herein r is an integer of 2 to 6, k and t each are an integer of 0 to 200, preferably 0 to 100, k+t is from 2 to 200, preferably 3 to 150, and s is an integer of 0 to 6.

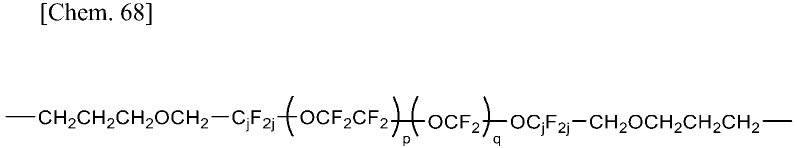

Herein j is an integer of 1 to 3, p and q each are an integer of 0 to 200, preferably 2 to 100, and p+q is from 2 to 300, preferably 4 to 200. The repeating units within parentheses may be randomly arranged.

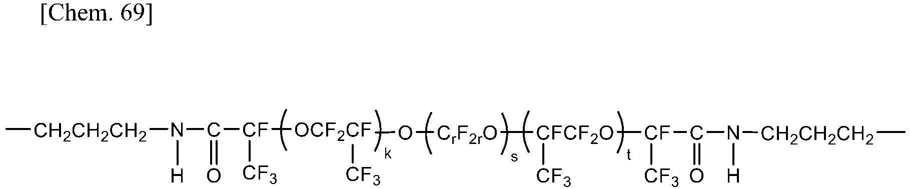

Herein r is an integer of 2 to 6, k and t each are an integer of 0 to 200, preferably 0 to 100, k+t is from 2 to 200, preferably 3 to 150, and s is an integer of 0 to 6.

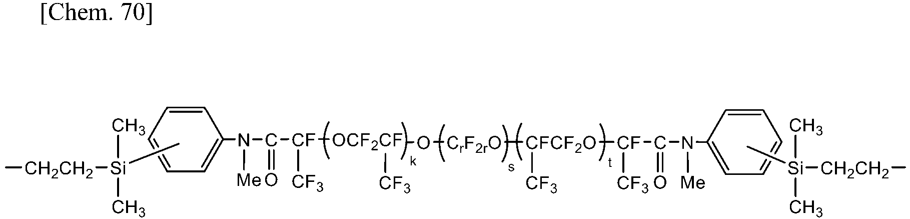

Herein r is an integer of 2 to 6, k and t each are an integer of 0 to 200, preferably 0 to 100, k+t is from 2 to 200, preferably 3 to 150, and s is an integer of 0 to 6.

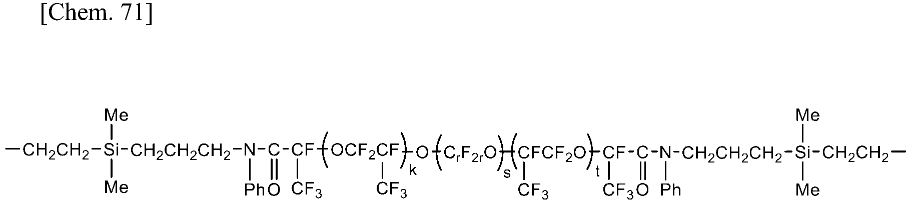

Herein r is an integer of 2 to 6, k and t each are an integer of 0 to 200, preferably 0 to 100, k+t is from 2 to 200, preferably 3 to 150, and s is an integer of 0 to 6.

### [Method of preparing component (B)]

The fluorinated epoxy compound having formula (7) can be prepared by the method described in JP-A 2014-080534. Specifically, a fluorinated compound C having a plurality of SiH groups is synthesized by first effecting addition reaction of a fluorinated compound A having an olefin site (alkenyl group) at the end with an organosilicon compound B having at least 2, preferably at least 3 SiH groups in the molecule in the presence of an addition reaction catalyst under such conditions that SiH groups are excessive.

Specifically, the fluorinated compound A has the general formula (12):

Rf⁰-(CH=CH₂)_{b'} (12)

wherein Rf⁰ is a monovalent group having the general formula (13) or a divalent group having the general formula (14), b' is 1 when Rf⁰ is monovalent, and b' is 2 when Rf⁰ is divalent.

Rf"-V¹- (13)

-V¹-Rf'-V¹- (14)

Herein Rf' and Rf" are as defined above. V¹ is each independently a single bond or a divalent organic group of 1 to 18 carbon atoms, preferably 1 to 8 carbon atoms which may contain at least one atom selected from oxygen, nitrogen, fluorine and silicon, which may have a cyclic structure and which may contain an unsaturated bond.

In formulae (13) and (14), V¹ is each independently a single bond or a divalent organic group of 1 to 18 carbon atoms, preferably 1 to 8 carbon atoms which may contain at least one atom selected from oxygen, nitrogen, fluorine and silicon, which may have a cyclic structure and which may contain an unsaturated bond.

The following structures are exemplary of V¹. Herein, Ph stands for phenyl, and *- designates a point of attachment to Rf' or Rf".

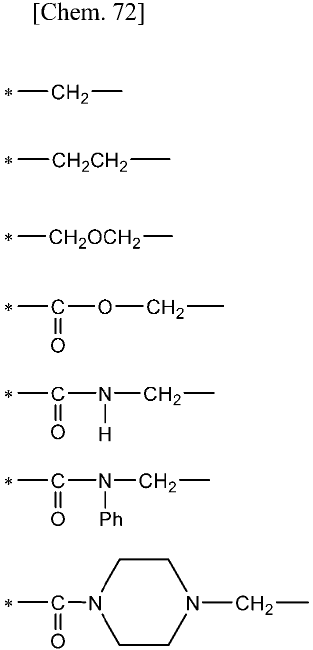

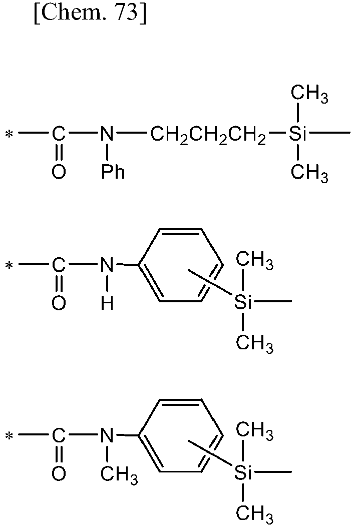

The following structures are exemplary of the monovalent fluorinated compound A.

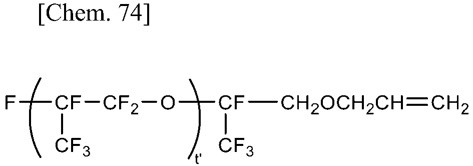

Herein t' is an integer of 2 to 200, preferably 2 to 100.

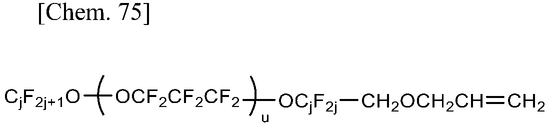

Herein j is an integer of 1 to 3, and u is an integer of 1 to 200, preferably 1 to 60.

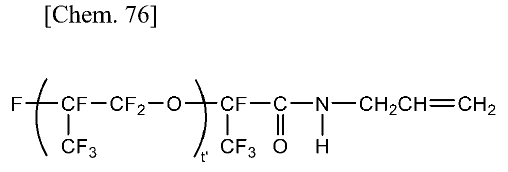

Herein t' is an integer of 2 to 200, preferably 2 to 100.

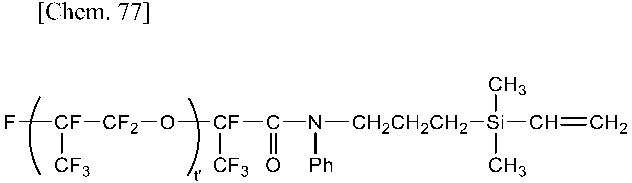

Herein t' is an integer of 2 to 200, preferably 2 to 100.

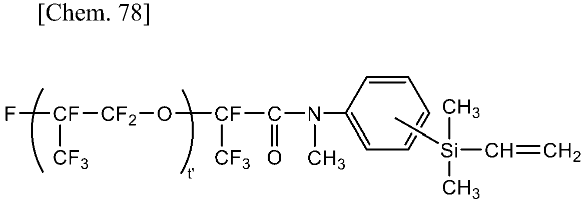

Herein t' is an integer of 2 to 200, preferably 2 to 100.

The following structures are exemplary of the divalent fluorinated compound A.

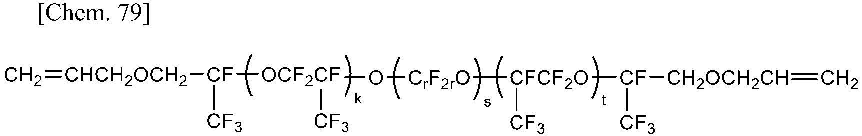

Herein r is an integer of 2 to 6, k and t each are an integer of 0 to 200, preferably 0 to 100, k+t is from 2 to 200, preferably from 3 to 150, and s is an integer of 0 to 6.

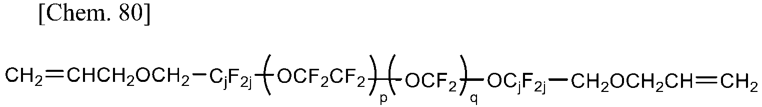

Herein j is an integer of 1 to 3, p and q each are an integer of 0 to 200, preferably 2 to 100, p+q is from 2 to 300, preferably from 4 to 200. The repeating units within parentheses may be randomly arranged.

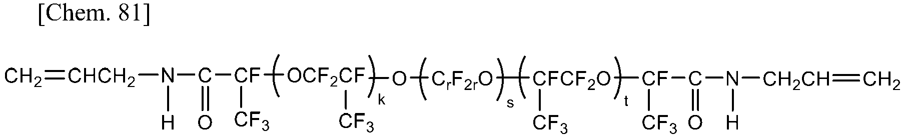

Herein r is an integer of 2 to 6, k and t each are an integer of 0 to 200, preferably 0 to 100, k+t is from 2 to 200, preferably from 3 to 150, and s is an integer of 0 to 6.

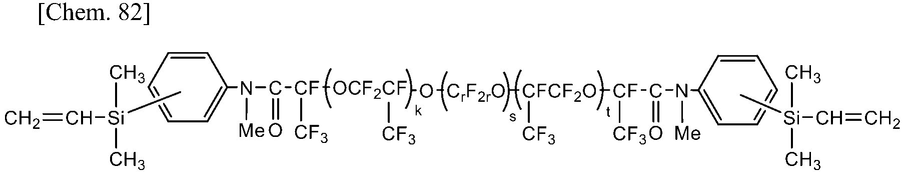

Herein r is an integer of 2 to 6, k and t each are an integer of 0 to 200, preferably 0 to 100, k+t is from 2 to 200, preferably from 3 to 150, and s is an integer of 0 to 6.

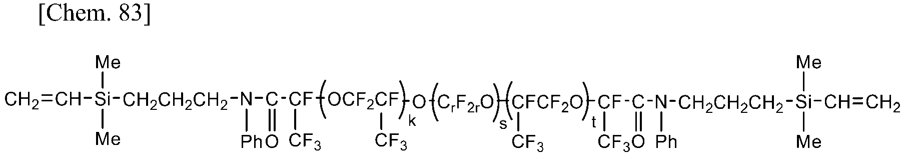

Herein r is an integer of 2 to 6, k and t each are an integer of 0 to 200, preferably 0 to 100, k+t is from 2 to 200, preferably from 3 to 150, and s is an integer of 0 to 6.

Specifically, the organosilicon compound B has the general formula (15):

Q-(H)_{b+c} (15)

wherein Q, b and c are as defined above and H within parentheses is hydrogen directly bonded to a silicon atom in the structure Q.

The following structures are exemplary of the organosilicon compound B.

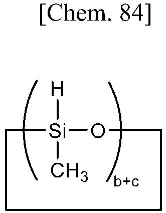

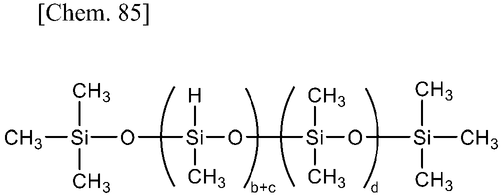

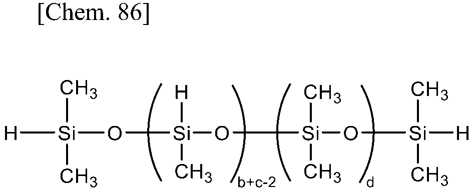

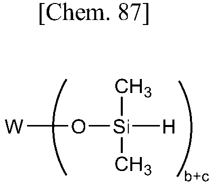

Herein b, c, d and W are as defined above.

The following compounds are especially preferred.

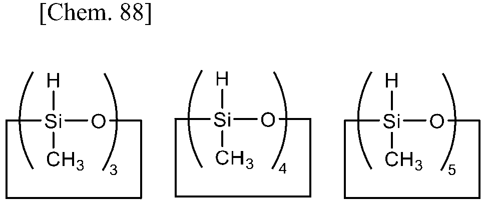

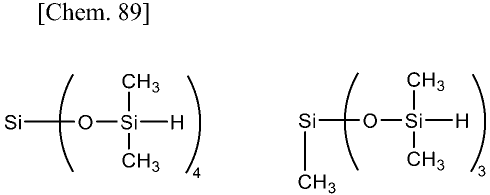

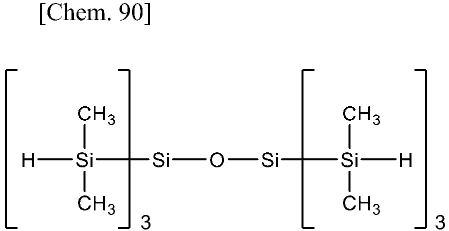

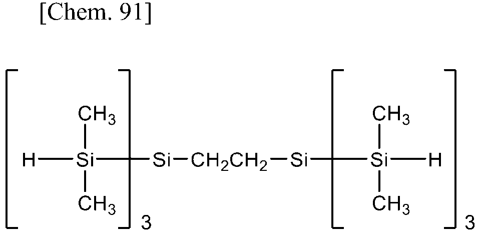

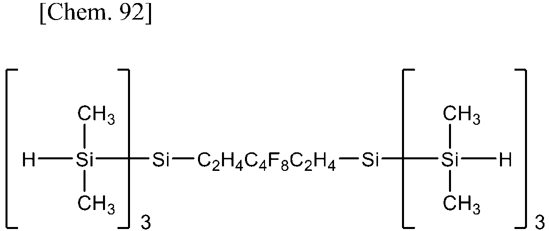

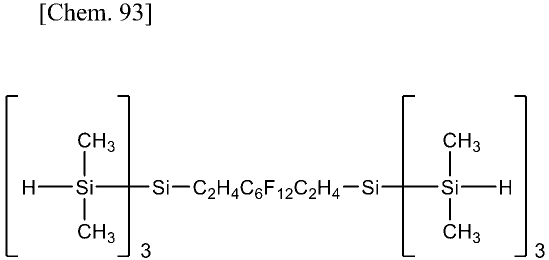

When the fluorinated compound A is monovalent and the fluorinated compound A and the organosilicon compound B are reacted in such amounts that b number of olefin sites (alkenyl groups) in the fluorinated compound A are available relative to (b+c) number of SiH groups in the organosilicon compound B, the resulting fluorinated compound C has a structure represented by the general formula (16):

(Rf⁰-C₂H₄)₃-Q-(H)_{c} (16)

wherein Rf⁰, Q, b and c are as defined above.

When the fluorinated compound A is divalent and the fluorinated compound A and the organosilicon compound B are reacted in such amounts that the molar ratio of fluorinated compound A : organosilicon compound B is (z+1) : (z+2) wherein z is as defined above, the resulting fluorinated compound C has a structure represented by the general formula (17). It is noted that when z=0, the compound C is structured such that organosilicon compound B is introduced at opposite ends of fluorinated compound A.

(H)_{c}-Q-[C₂H₄-Rf⁰-C₂H₄-T¹]_{z}-C₂H₄-Rf⁰-C₂H₄-Q-(H)_{c} (17)

Herein Q, Rf⁰, c and z are as defined above. H within parentheses is hydrogen directly bonded to a silicon atom in the structure Q. T¹ is a divalent group having the general formula (18): 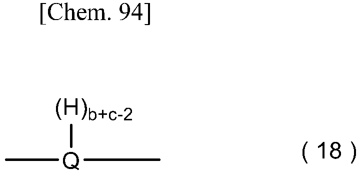 wherein Q, b and c are as defined above and H within parentheses is hydrogen directly bonded to a silicon atom in the structure Q.

The fluorinated compound A and the organosilicon compound B are preferably combined in such a ratio that the organosilicon compound B may be 1 to 10 moles, preferably 2 to 6 moles per mole of terminal olefin sites (alkenyl groups) in the fluorinated compound A. To prevent three-dimensional crosslinking, desirably addition reaction is carried out using the organosilicon compound B in an excessive amount relative to terminal olefin sites (alkenyl groups) in the fluorinated compound A and thereafter, unreacted organosilicon compound B is removed as by vacuum distillation.

The amounts of fluorinated compound A and organosilicon compound B used for reaction are desirably set such that when fluorinated compound A is monovalent, the number of olefin sites (alkenyl groups) in fluorinated compound A is less than (b+c), preferably equal to b per molecule of organosilicon compound B having (b+c) number of SiH groups; and when fluorinated compound A is divalent, the molar ratio of fluorinated compound A : organosilicon compound B is (z+1) : (z+2) wherein z is as defined above. Notably, when fluorinated compound A is divalent, a stepwise process may be employed if necessary, in which an intermediate wherein z is small is synthesized, before addition reaction is carried out. For example, a fluorinated compound C having formula (17) wherein z=2 can be synthesized by first synthesizing a fluorinated compound C having formula (17) wherein z=0, and reacting 1 mole of fluorinated compound A again with 2 moles of the fluorinated compound C having formula (17) wherein z=0. Alternatively, a compound having the desired value of z can be separated from a mixture of compounds having different values of z, by any separation means. For example, only a compound wherein z=1 may be taken out from a mixture of compounds wherein z is from 0 to 3 by preparative chromatography.

Though possible in a solventless system, the addition reaction may be carried out in the presence of a solvent if necessary. As the solvent, any of commonly used organic solvents such as toluene, xylene and isooctane may be used. Preference is given to a solvent which has a boiling point above the desired reaction temperature, which does not retard the reaction, and in which fluorinated compound C obtained after reaction is soluble at the reaction temperature. For example, partially fluorine-modified solvents including fluorine-modified aromatic hydrocarbon solvents such as m-xylene hexafluoride and benzotrifluoride and fluorine-modified ether solvents such as methyl perfluorobutyl ether are desirable. Inter alia, m-xylene hexafluoride is most preferred.

When used, the amount of the solvent is preferably 40 to 200 parts by weight, more preferably 50 to 150 parts by weight per 100 parts by weight of the fluorinated compound A although the amount is not particularly limited.

The addition reaction catalyst may be selected from prior art well-known catalysts. For example, compounds containing platinum, rhodium or palladium may be used. Inter alia, platinum-containing compounds are preferred. Use may be made of hexachloroplatinum(IV) acid hexahydrate, platinum carbonylvinylmethyl complex, platinum-divinyltetramethyldisiloxane complex, platinum-cyclovinylmethylsiloxane complex, platinum-octylaldehyde/octanol complex, and platinum supported on active carbon.

The amount of the addition reaction catalyst used is a catalytic amount, preferably to give 0.1 to 5,000 ppm, more preferably 1 to 1,000 ppm of metal based on the weight of fluorinated compound A.

In the addition reaction, the order of charging the components is not particularly limited. Exemplary are a method of gradually heating a mixture of fluorinated compound A, organosilicon compound B and an addition reaction catalyst from room temperature to the addition reaction temperature, a method of heating a mixture of fluorinated compound A, organosilicon compound B and a solvent at the desired reaction temperature and then adding an addition reaction catalyst thereto, a method of heating a mixture of organosilicon compound B and an addition reaction catalyst at the desired reaction temperature and adding dropwise fluorinated compound A thereto, and a method of heating organosilicon compound B at the desired reaction temperature and adding dropwise a mixture of fluorinated compound A and an addition reaction catalyst thereto. Inter alia, the method of heating a mixture of fluorinated compound A, organosilicon compound B and a solvent at the desired reaction temperature and then adding an addition reaction catalyst thereto, and the method of heating organosilicon compound B at the desired reaction temperature and adding dropwise a mixture of fluorinated compound A and an addition reaction catalyst thereto are preferred.

The addition reaction conditions may accord with any prior art well-known method. The reaction is preferably carried out in dry atmosphere, in air or inert gas (e.g., N₂ or Ar), at a temperature of 50 to 150°C, preferably 70 to 120°C, for 0.5 to 96 hours, preferably 1 to 48 hours.

Next, addition reaction of SiH group in fluorinated compound C with terminal olefin site (alkenyl group) and epoxy group in compound D having terminal olefin site and epoxy group in the molecule is carried out, yielding a fluorinated epoxy compound having formula (7).

Specifically, the compound D having a terminal olefin site and an epoxy group in the molecule is represented by the general formula (19).
[Chem. 95]

CH₂=CH-Z¹-E (19)

Herein E is as defined above. Z¹ is a single bond or a C₁-C₁₈ divalent hydrocarbon group which may contain an ether bond or ester bond and may have a cyclic structure.

In formula (19), Z¹ is a single bond or a C₁-C₁₈ divalent hydrocarbon group which may contain an ether bond or ester bond and may have a cyclic structure. Examples of Z¹ other than a single bond include those of the following structure wherein -* designates a point of attachment to E and - designates a point of attachment to the carbon atom.

-CH₂-*

-CH₂CH₂-*

-CH₂CH₂CH₂-*

-CH₂CH₂CH₂CH₂-*

-CH₂CH₂CH₂CH₂CH₂-*

-CH₂CH₂CH₂CH₂CH₂CH₂-*

-CH₂OCH₂-*

-CH₂OCH₂CH₂OCH₂-*

and

-CH₂OCH₂CH₂OCH₂CH₂OCH₂CH₂-*

Examples of the compound D having formula (19) include structures having the formulae (a') to (d').

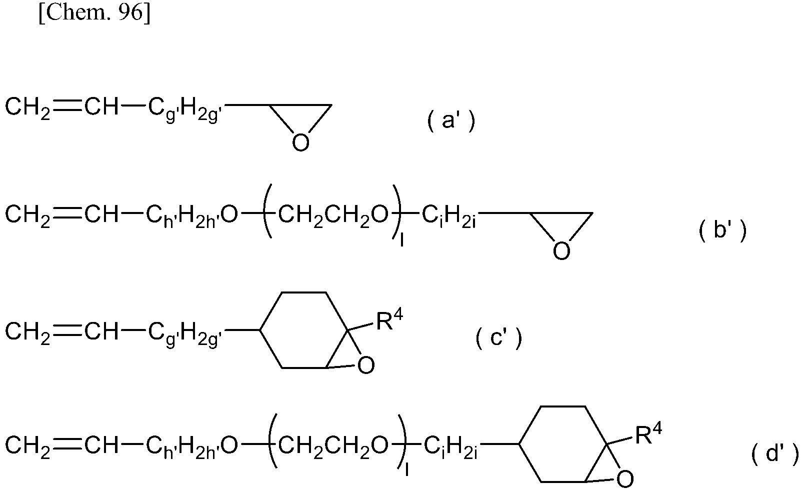

Herein, g' is an integer of 0 to 18, preferably 0 to 13, h' is an integer of 0 to 8, i is an integer of 1 to 5, I is an integer of 0 to 9, h'+2I+i is from 0 to 18, preferably h' is an integer of 0 to 4, i is 1 or 2, I is an integer of 0 to 4, h'+2I+i is from 0 to 13. R⁴ is as defined above, preferably hydrogen or methyl.

Examples of the compound D having a terminal olefin site (alkenyl group) and an epoxy group in the molecule are shown below. The compound D may be used alone or in admixture.

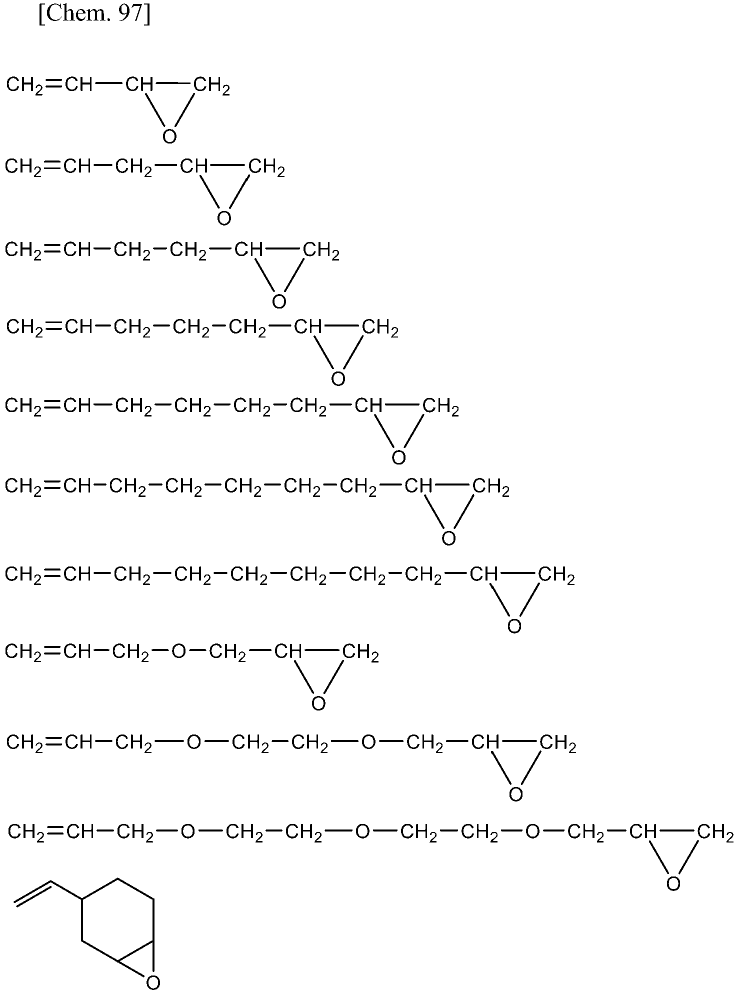

The addition reaction of fluorinated compound C with compound D may accord with any prior art well-known method, for example, the above-mentioned method. The reaction is preferably carried out in the presence of the addition reaction catalyst, in dry atmosphere, in air or inert gas (e.g., N₂ or Ar), at a temperature of 50 to 150°C, preferably 50 to 100°C, for 0.5 to 96 hours, preferably 1 to 48 hours. For the reaction, a solvent may be used if necessary.

In a preferred embodiment, addition reaction is carried out using the compound D in such an amount relative to fluorinated compound C that the number of terminal olefin sites (alkenyl groups) in compound D may be equal to or in excess of the number of SiH groups in fluorinated compound C, after which unreacted compound D is removed as by vacuum distillation. Specifically, the reaction is preferably carried out using compounds C and D in such amounts that the amount of terminal olefin sites (alkenyl groups) in compound D may be 1 to 5 moles, more preferably 1 to 2 moles per mole of SiH groups in fluorinated compound C.

More preferred examples of the compound having formula (7) include those compounds shown below.

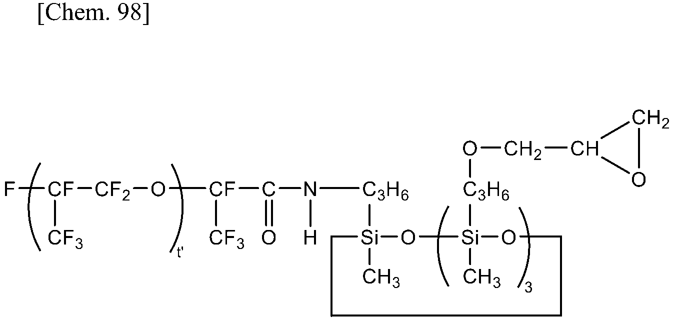

Herein t' is an integer of 2 to 200, preferably 2 to 100.

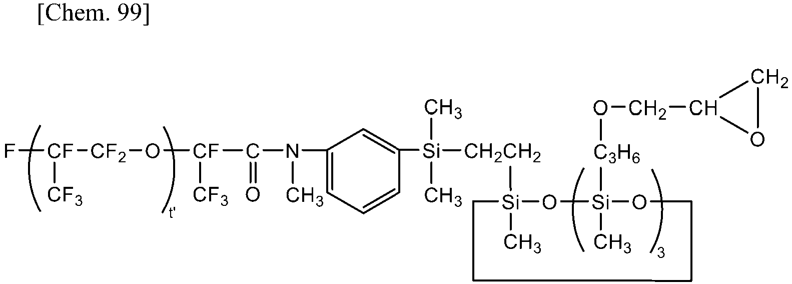

Herein t' is an integer of 2 to 200, preferably 2 to 100.

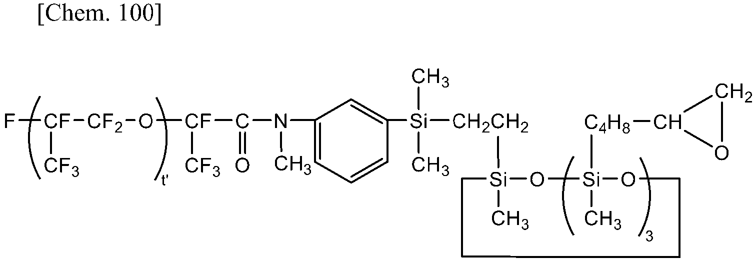

Herein t' is an integer of 2 to 200, preferably 2 to 100.

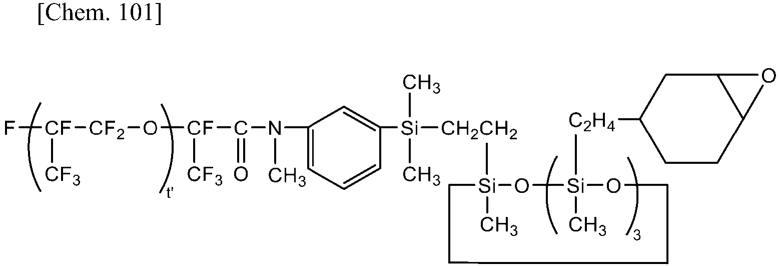

Herein t' is an integer of 2 to 200, preferably 2 to 100.

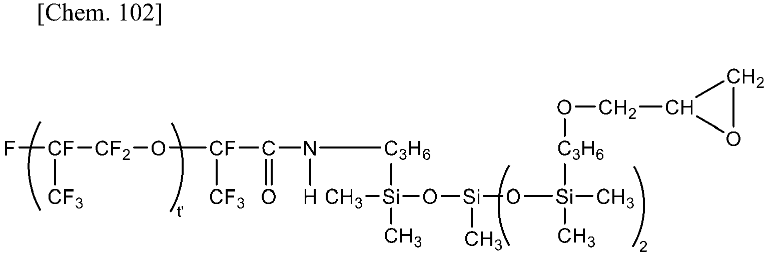

Herein t' is an integer of 2 to 200, preferably 2 to 100.

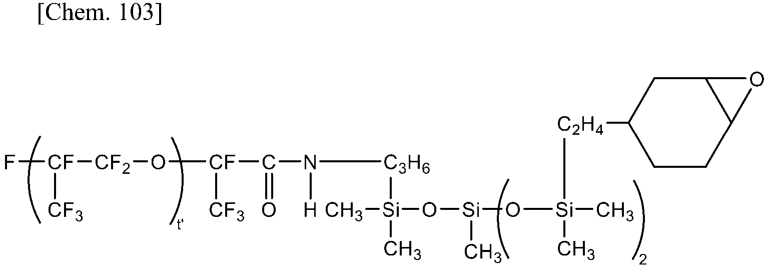

Herein t' is an integer of 2 to 200, preferably 2 to 100.

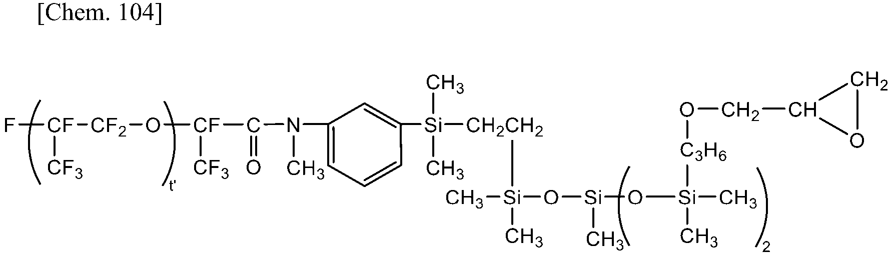

Herein t' is an integer of 2 to 200, preferably 2 to 100.

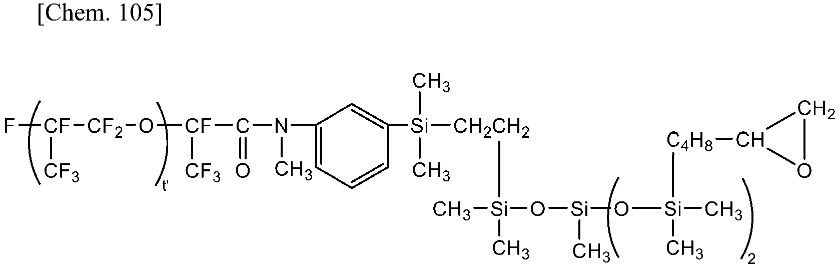

Herein t' is an integer of 2 to 200, preferably 2 to 100.

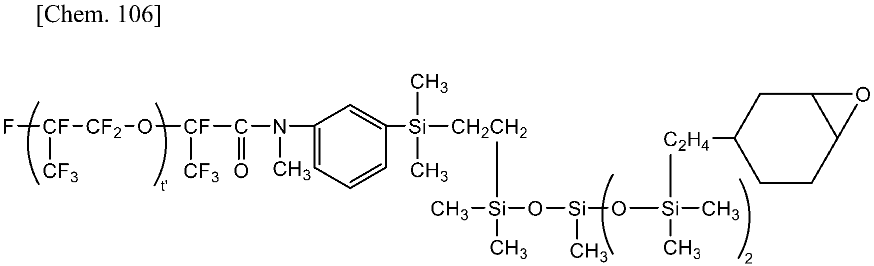

Herein t' is an integer of 2 to 200, preferably 2 to 100.

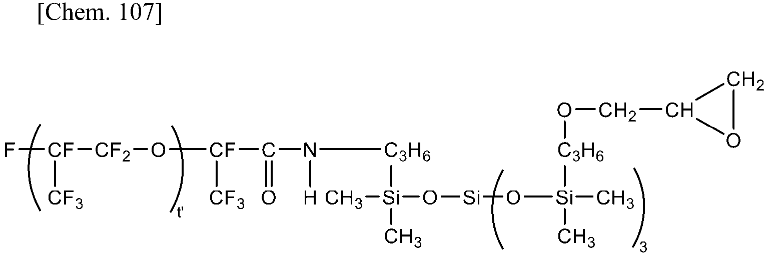

Herein t' is an integer of 2 to 200, preferably 2 to 100.

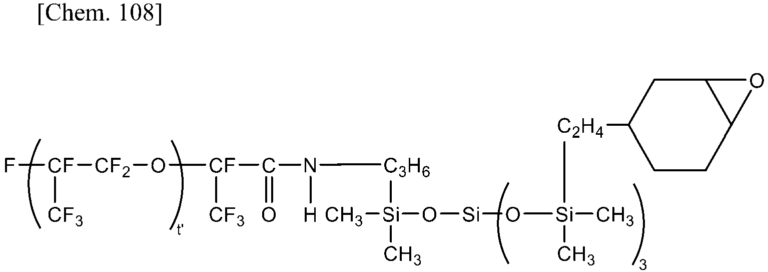

Herein t' is an integer of 2 to 200, preferably 2 to 100.

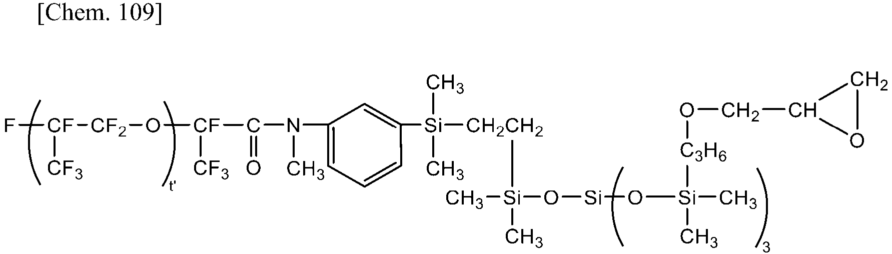

Herein t' is an integer of 2 to 200, preferably 2 to 100.

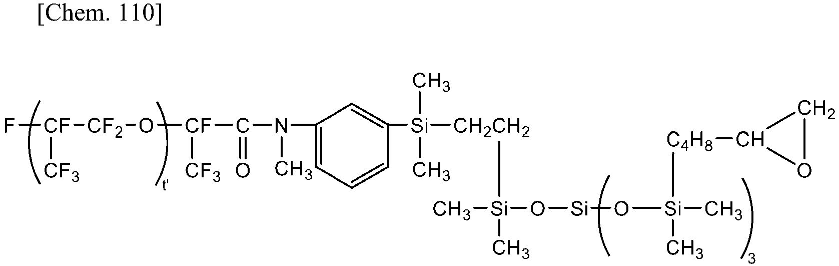

Herein t' is an integer of 2 to 200, preferably 2 to 100.

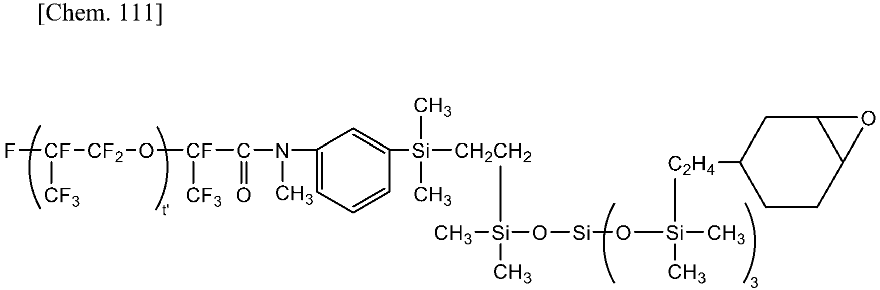

Herein t' is an integer of 2 to 200, preferably 2 to 100.

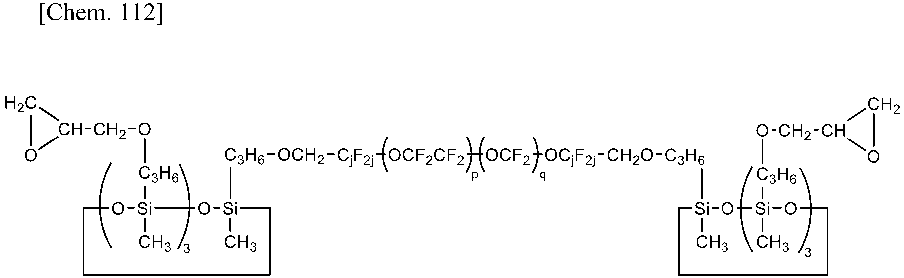

Herein j is an integer of 1 to 3, p and q each are an integer of 0 to 200, preferably 2 to 100, and p+q is from 2 to 300, preferably from 4 to 200. The repeating units within parentheses may be randomly arranged.

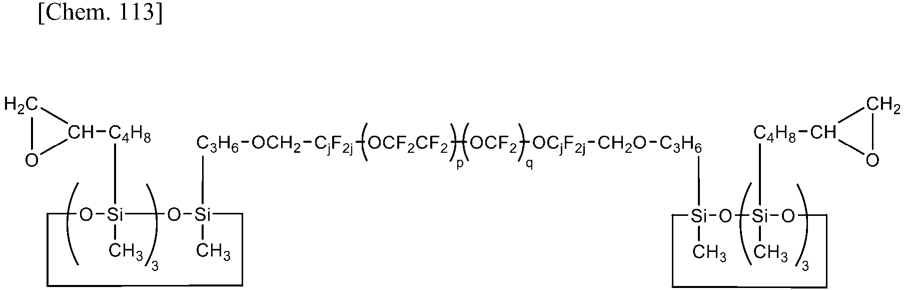

Herein j is an integer of 1 to 3, p and q each are an integer of 0 to 200, preferably 2 to 100, and p+q is from 2 to 300, preferably from 4 to 200. The repeating units within parentheses may be randomly arranged.

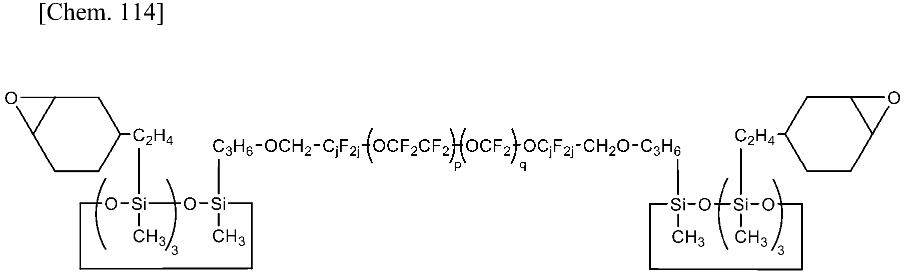

Herein j is an integer of 1 to 3, p and q each are an integer of 0 to 200, preferably 2 to 100, and p+q is from 2 to 300, preferably from 4 to 200. The repeating units within parentheses may be randomly arranged.

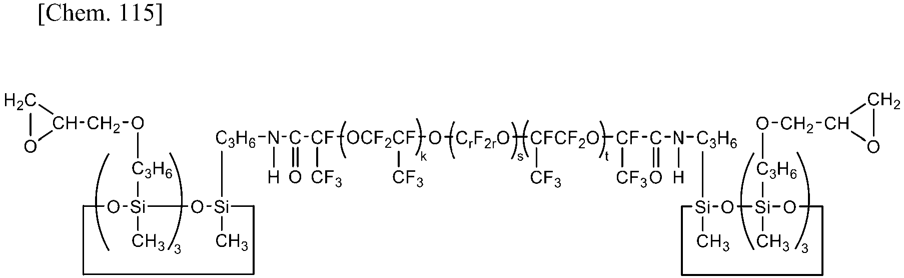

Herein r is an integer of 2 to 6, k and t each are an integer of 0 to 200, preferably 0 to 100, k+t is from 2 to 200, preferably from 3 to 150, and s is an integer of 0 to 6.

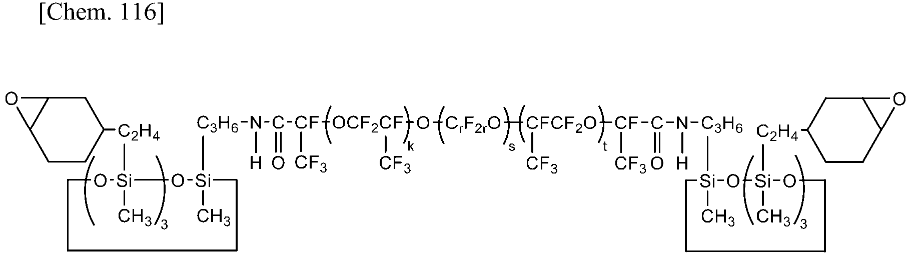

Herein r is an integer of 2 to 6, k and t each are an integer of 0 to 200, preferably 0 to 100, k+t is from 2 to 200, preferably from 3 to 150, and s is an integer of 0 to 6.

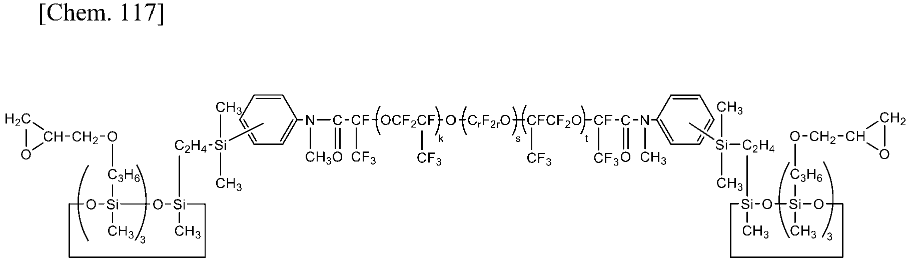

Herein r is an integer of 2 to 6, k and t each are an integer of 0 to 200, preferably 0 to 100, k+t is from 2 to 200, preferably from 3 to 150, and s is an integer of 0 to 6.

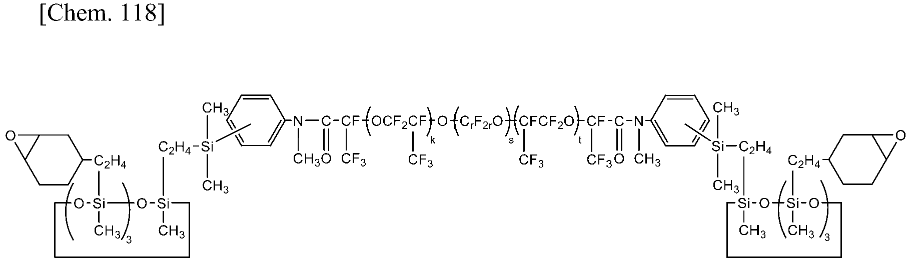

Herein r is an integer of 2 to 6, k and t each are an integer of 0 to 200, preferably 0 to 100, k+t is from 2 to 200, preferably from 3 to 150, and s is an integer of 0 to 6.

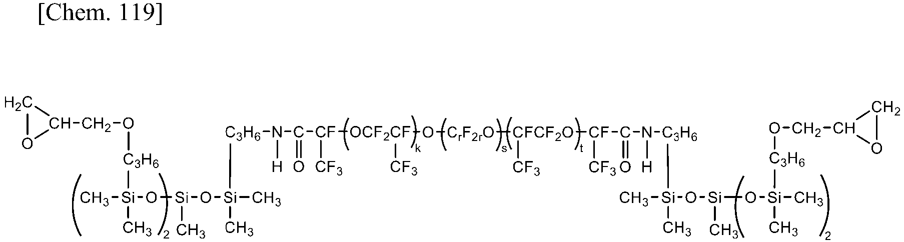

Herein r is an integer of 2 to 6, k and t each are an integer of 0 to 200, preferably 0 to 100, k+t is from 2 to 200, preferably from 3 to 150, and s is an integer of 0 to 6.

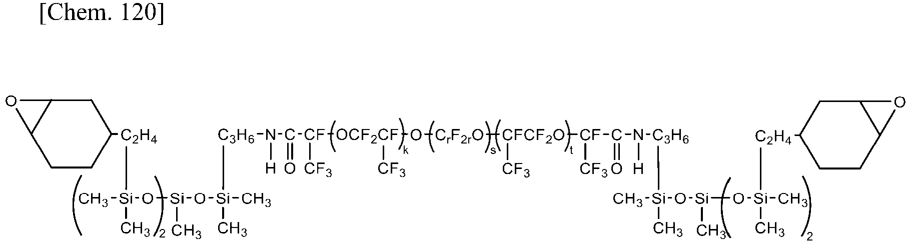

Herein r is an integer of 2 to 6, k and t each are an integer of 0 to 200, preferably 0 to 100, k+t is from 2 to 200, preferably from 3 to 150, and s is an integer of 0 to 6.

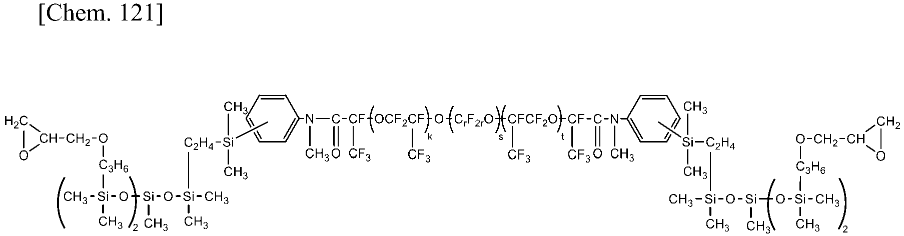

Herein r is an integer of 2 to 6, k and t each are an integer of 0 to 200, preferably 0 to 100, k+t is from 2 to 200, preferably from 3 to 150, and s is an integer of 0 to 6.

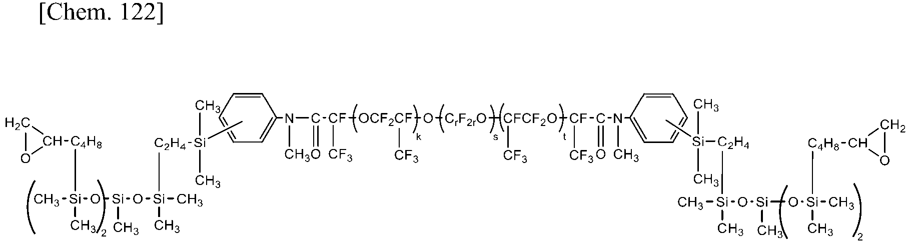

Herein r is an integer of 2 to 6, k and t each are an integer of 0 to 200, preferably 0 to 100, k+t is from 2 to 200, preferably from 3 to 150, and s is an integer of 0 to 6.

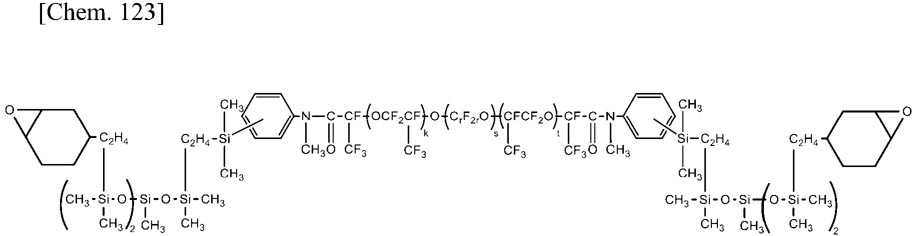

Herein r is an integer of 2 to 6, k and t each are an integer of 0 to 200, preferably 0 to 100, k+t is from 2 to 200, preferably from 3 to 150, and s is an integer of 0 to 6.

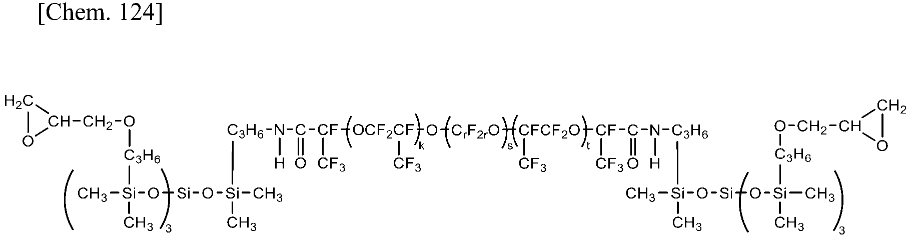

Herein r is an integer of 2 to 6, k and t each are an integer of 0 to 200, preferably 0 to 100, k+t is from 2 to 200, preferably from 3 to 150, and s is an integer of 0 to 6.

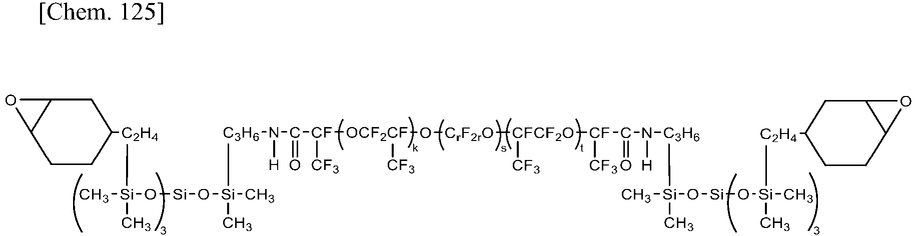

Herein r is an integer of 2 to 6, k and t each are an integer of 0 to 200, preferably 0 to 100, k+t is from 2 to 200, preferably from 3 to 150, and s is an integer of 0 to 6.

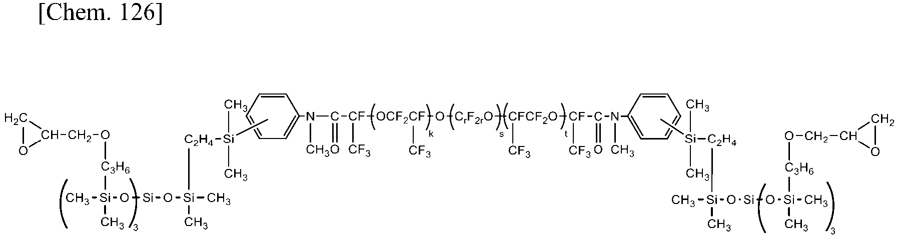

Herein r is an integer of 2 to 6, k and t each are an integer of 0 to 200, preferably 0 to 100, k+t is from 2 to 200, preferably from 3 to 150, and s is an integer of 0 to 6.

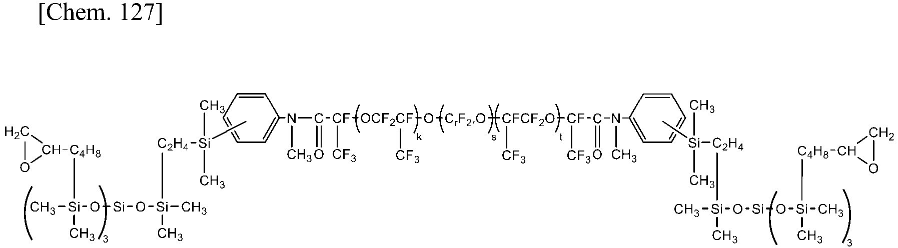

Herein r is an integer of 2 to 6, k and t each are an integer of 0 to 200, preferably 0 to 100, k+t is from 2 to 200, preferably from 3 to 150, and s is an integer of 0 to 6.

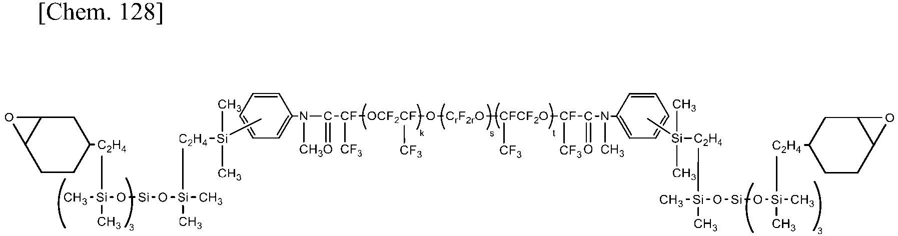

Herein r is an integer of 2 to 6, k and t each are an integer of 0 to 200, preferably 0 to 100, k+t is from 2 to 200, preferably from 3 to 150, and s is an integer of 0 to 6.

The fluorinated epoxy compound as component (B) preferably has an epoxy content of 0.01 to 0.4 mol/100 g, more preferably 0.02 to 0.3 mol/100 g. Herein the epoxy content can be measured by ¹H-NMR spectroscopy.

Component (B) is used in such an amount that the amount of epoxy group in component (B) may be 0.5 to 5 moles, preferably 0.7 to 2.5 moles per mole of secondary amino group in component (A). If the epoxy amount is too small, undesirably no cured product is obtained because of an insufficient degree of crosslinking. If the epoxy amount is too large, undesirably there is a likelihood that epoxy groups are left in the cured product and physical properties of the cured product change with the lapse of time.

The fluorinated epoxy compound as component (B) may be used alone or in admixture of two or more.

### [Component (C) or other components]

To the fluoropolyether-based curable composition of the invention, in addition to components (A) and (B), various additives, for example, cure promoters, plasticizers, viscosity modifiers, plasticity enhancers, inorganic fillers, and silane coupling agents may be added if necessary, for the purpose of expanding the applicability of the composition. The amounts of these additives are arbitrary as long as the objects of the invention are not compromised and characteristics of the composition and physical properties of the cured product are not impaired.

When added to the fluoropolyether-based curable composition, the cure promoter functions to promote the reaction of secondary amino group in component (A) with epoxy group in component (B) so that a cured product having better physical properties may be obtained in a shorter time. With the cure promoter added, the balance between the pot life and the heat cure time can be tailored. It may be either a carboxylic anhydride or a compound having Lewis acidity, with no additional limits.

Exemplary of the carboxylic anhydride are carboxylic anhydrides which are solid at 23°C. Exemplary compounds are shown below.

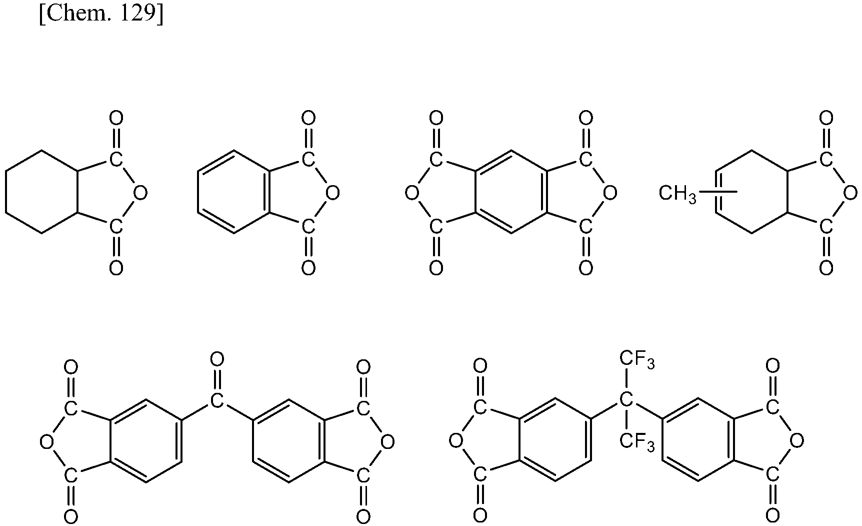

The carboxylic anhydride may also be a cyclic organopolysiloxane which has a perfluoroalkyl group or perfluorooxyalkyl group bonded to a silicon atom via a divalent hydrocarbon group which may contain a silicon-bonded hydrogen atom and at least one atom selected from oxygen, nitrogen and silicon per molecule and a cyclic carboxylic anhydride residue bonded to a silicon atom via a divalent hydrocarbon group (that is, fluorinated organopolysiloxane-modified carboxylic anhydride compound). This compound is exemplified by those compounds having the general formula (20).

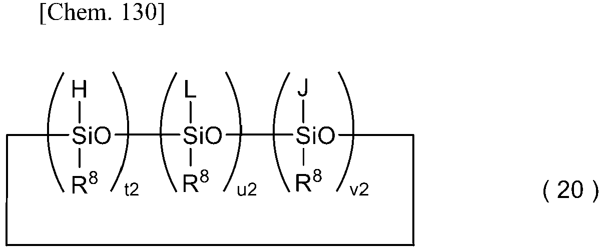

Herein L is independently a monovalent perfluoropolyether group bonded to the silicon atom via a divalent linking group, J is independently a cyclic carboxylic anhydride residue bonded to the silicon atom via a divalent hydrocarbon group, R⁸ is independently an unsubstituted or halo-substituted monovalent hydrocarbon group, t2 is an integer of 1 to 6, u2 is an integer of 1 to 4, v2 is an integer of 1 to 4, t2+u2+v2 is an integer of 4 to 10, and the repeating units within parentheses may be randomly arranged.

In formula (20), L is independently a monovalent perfluoropolyether group bonded to the silicon atom via a divalent linking group, which is preferably represented by the following general formula. L is introduced from the aspects of compatibility with components (A) and (B), dispersibility, and uniformity after curing.

-B-Rf²

Herein Rf² is a monovalent perfluoropolyether group and identical with Rf" in formula (9) and its examples are the same as those exemplified for Rf". B is a C₁-C₂₀ divalent organic group (specifically hydrocarbon group) which may contain at least one atom selected from oxygen, nitrogen and silicon.

Examples of the group B include -CH₂-*, -CH₂CH₂CH₂-*, -OCH₂-*, -CH₂OCH₂-*, -(CH₂)₂OCH₂-*, -(CH₂)₃OCH₂-*, -CH₂-NH-CO-*, -(CH₂)₃-NH-CO-*, -(CH₂)₃-N(CH₃)-CO-*, -(CH₂)₃-N(CH₂CH₃)-CO-*, -(CH₂)₃-N(CH(CH₃)₂)-CO-*, -CH₂-N(Ph)-CO-*, -(CH₂)₃-O-CO-*, -CH₂OCH₂CH₂CH₂-Si(CH₃)₂-O-Si(CH₃)₂-(CH₂)₂-*, -CO-N(CH₃)-Ph'-Si(CH₃)₂-(CH₂)₂-*, -CO-N(CH₂)-Ph'-Si(CH₂)₂-(CH₂)₂-Si(CH₂)₂-O-Si(CH₂)₂-(CH₂)₂-*, -CO-NH-Ph'-[Si(CH₃)₂-(CH₂)_{2]3}-CH₂-*, -CO-N(CH₃)-Ph'-[Si(CH₃)₂-(CH₂)₂]₃-*, and groups having the general formulae shown below. Inter alia, -(CH₂)₃OCH₂-*, -(CH₂)₃-NH-CO-*, and groups having the general formulae shown below are preferred. It is noted that Ph stands for phenyl and Ph' for phenylene, -* designates a point of attachment to Rf² and - designates a point of attachment to a silicon atom in the organohydrogenpolysiloxane.

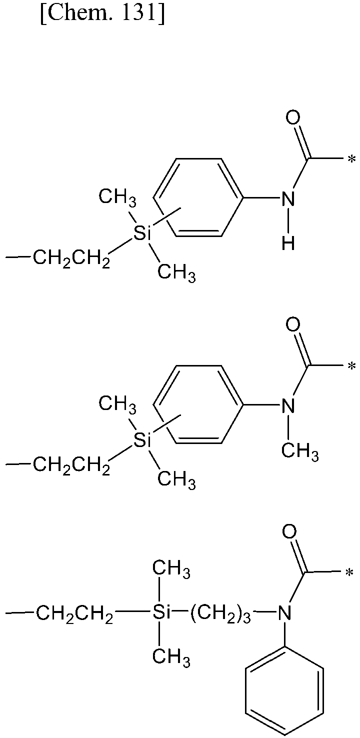

In formula (20), J is independently a cyclic carboxylic anhydride residue bonded to the silicon atom via a divalent hydrocarbon group. Those groups having the general formula below are exemplary.

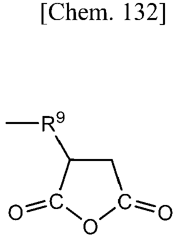

Herein R⁹ is a C₂-C₁₅ divalent hydrocarbon group such as ethylene, propylene or butylene, with propylene being preferred.

In formula (20), R⁸ is independently an unsubstituted or halo-substituted monovalent hydrocarbon group, which is preferably free of an aliphatic unsaturated bond and of 1 to 10 carbon atoms, more preferably 1 to 8 carbon atoms. Examples include alkyl groups such as methyl, ethyl, propyl, butyl, hexyl, cyclohexyl, and octyl; aryl groups such as phenyl and tolyl; aralkyl groups such as benzyl and phenylethyl; and substituted monovalent hydrocarbon groups in which some or all hydrogen is substituted by halogen such as fluorine. Inter alia, methyl and ethyl are preferred.

In formula (20), t2 is an integer of 1 to 6, preferably 2 to 5, u2 is an integer of 1 to 4, preferably 1 to 3, v2 is an integer of 1 to 4, preferably 1 to 3, t2+u2+v2 is an integer of 4 to 10, preferably 4 to 8. The order of arrangement of ((H)(R⁸)SiO) units, ((L)(R⁸)SiO) units and ((J)(R⁸)SiO) units is random.

Examples of the cyclic organopolysiloxane having formula (20) include the following compounds.

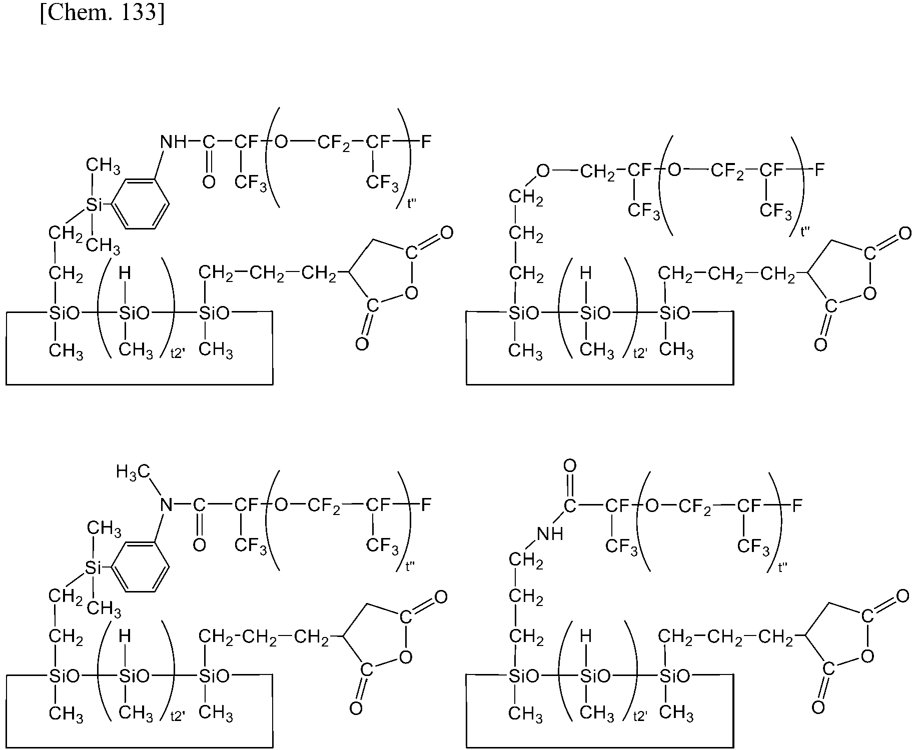

Herein t2' is 2 or 3, and t" is an integer of 2 to 20.

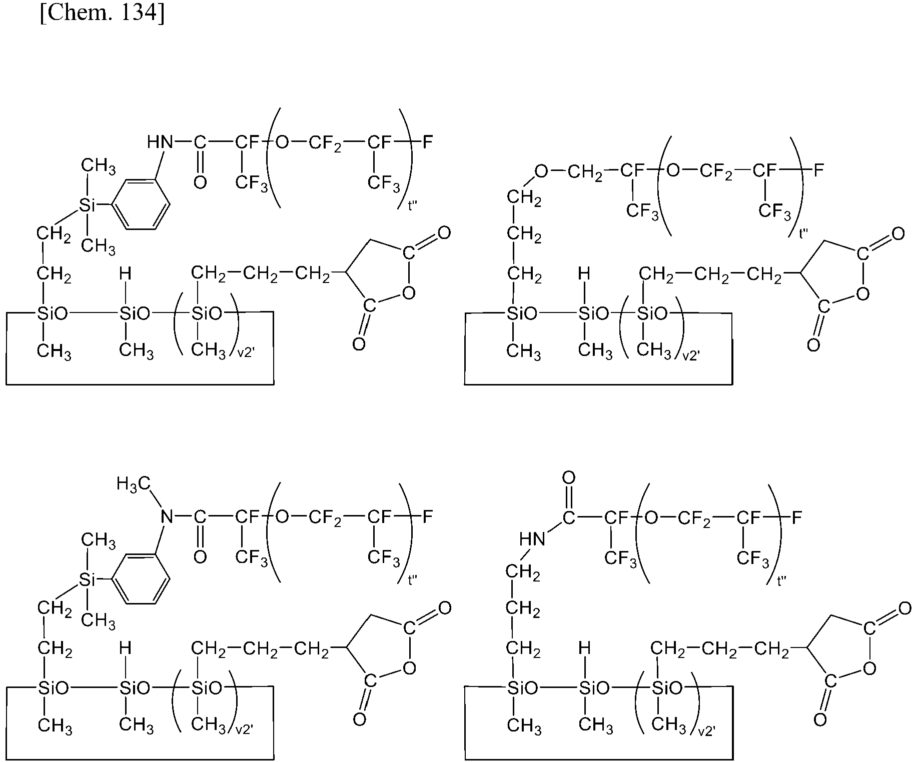

Herein v2' is 2 or 3, and t" is an integer of 2 to 20.

The carboxylic anhydride as the cure promoter may be used alone or in admixture of two or more. A carboxylic anhydride which is solid at 23°C may be used in combination with the cyclic organopolysiloxane, that is, fluorinated organopolysiloxane-modified carboxylic anhydride.

When the carboxylic anhydride is blended as the cure promoter, its amount is preferably 0.01 to 2 parts by weight, more preferably 0.05 to 1 part by weight per 100 parts by weight of component (A). Also preferably, the amount of cyclic carboxylic anhydride residue group in the adhesion promoter is 0.005 to 0.5 mole, more preferably 0.05 to 0.1 mole per mole of secondary amino group in component (A).

Preferred examples of the compound having Lewis acidity include compounds containing an element selected from tin, titanium, zinc, boron, ytterbium, yttrium, niobium, europium and zirconium. Illustrative examples include ZnCl₂, TiCl₄, SnCl₄, NbCl₅, Yb(OTf)₃, Y(OTf)₃, B(C₆F₅)₃, and "Orgatix" series by Matsumoto Fine Chemical Co., Ltd. Notably Tf is trifluoromethanesulfonyl group: -S(O)₂CF₃. Inter alia, ZnCl₂, TiCl₄, SnCl₄ and B(C₆F₅)₃ are preferred. When the compound having Lewis acidity is blended as the cure promoter, its amount may be adjusted so as to set up a good balance between the pot life and the heat cure time.

Polyfluoroamino compounds having the general formula (21) and/or polyfluoro compounds having the general formulae (22) and (23) may be used as the plasticizer, viscosity modifier and plasticity enhancer.
[Chem. 135]

Rf³-A-X-H (21)

Herein A and X are as defined above, Rf³ is a monovalent perfluoropolyether group having the general formula: 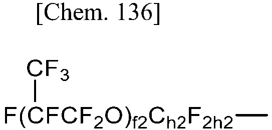 wherein f2 is an integer of 2 to 200, preferably 2 to 100, and h2 is an integer of 1 to 3, such that the molecular weight is not higher than that of Rf in formula (1) representative of component (A).

Y¹-O-(CF₂CF₂CF₂O)_{c2}-Y¹ (22)

Herein Y¹ is independently a group of the formula: Cₖ₂F₂ₖ₂₊₁- wherein k2 is an integer of 1 to 3, c2 is an integer of 1 to 200, such that the molecular weight is not higher than that of Rf in formula (1) representative of component (A).

Y²-O-(CF₂O)_{d2}(CF₂CF₂O)ₑ₂-Y² (23)

Herein Y² is the same as Y¹, d2 and e2 each are an integer of 1 to 200, d2+e2 is from 2 to 200, such that the molecular weight is not higher than that of Rf in formula (1) representative of component (A). The repeating units within parentheses may be randomly arranged.

In formula (21), "A" is as exemplified above for "A" in average formula (1), and X is as exemplified above for X in average formula (1).

In formula (21), Rf³ is a monovalent perfluoropolyether group having the general formula: 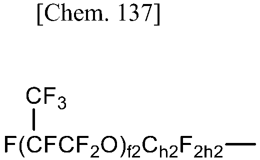 wherein f2 is an integer of 2 to 200, preferably 2 to 100, and h2 is an integer of 1 to 3, such that the molecular weight is not higher than that of Rf in formula (1) representative of component (A).

Preferred examples of the group Rf³ are shown below. 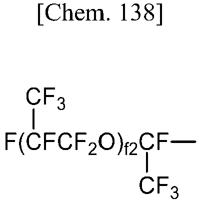 Herein f2 is as defined above, such that the molecular weight is not higher than that of Rf in formula (1) representative of component (A).

Examples of the polyfluoromonoamino compound having formula (21) are shown below. Notably f2 satisfies the aforementioned requirements.

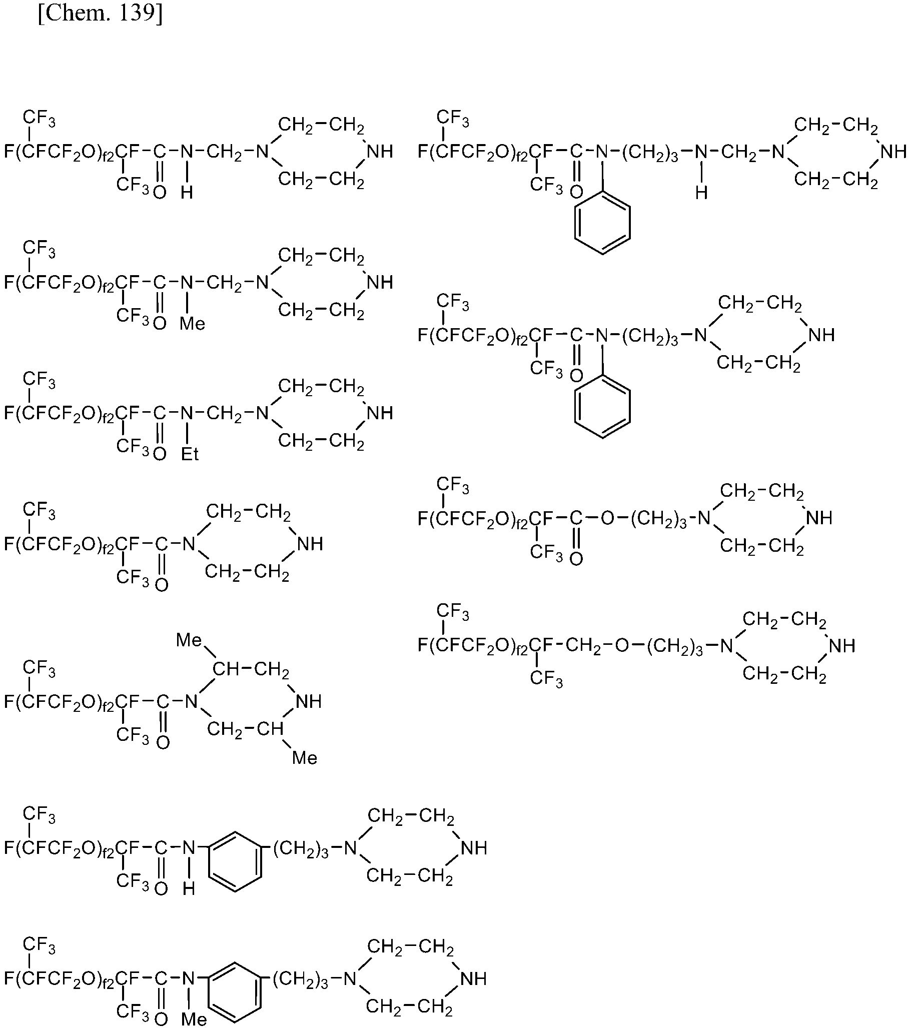

Examples of the polyfluoro compounds having formulae (22) and (23) are shown below. Notably c2, d2, e2 and the sum of d2 and e2 satisfy the aforementioned requirements. The repeating units within parentheses may be randomly arranged.

CF₃O-(CF₂CF₂CF₂O)_{c2}-CF₂CF₃

CF₃-O-(OCF₂)_{d2}(OCF₂CF₂)ₑ₂-CF₃

Desirably, the polyfluoroamino compound having formula (21) and the polyfluoro compounds having formulae (22) and (23) each have a viscosity at 23°C of 2,000 to 50,000 mPa·s.

When the polyfluoroamino compound having formula (21) and the polyfluoro compounds having formulae (22) and (23) are blended, the amount of each compound is preferably 1 to 300 parts by weight, more preferably 30 to 250 parts by weight per 100 parts by weight of component (A).

Examples of the inorganic filler include silica powders such as fumed silica (or dry silica), precipitated silica (or wet silica), spherical silica (or fused silica), sol-gel method silica, and silica aerosol; surface-treated silica powders, that is, the foregoing silica particles which are subjected on their surface to hydrophobic treatment with various organochlorosilanes, organodisilazanes or cyclic organopolysilazanes; reinforcing or semi-reinforcing fillers such as quartz powder, fused quartz powder, diatomaceous earth, and calcium carbonate; inorganic pigments such as titanium oxide, iron oxide, carbon black and cobalt aluminate; heat resistance improvers such as titanium oxide, iron oxide, carbon black, cerium oxide, cerium hydroxide, zinc carbonate, magnesium carbonate, and manganese carbonate; heat conductive agents such as alumina, boron nitride, silicon carbide and metal powders; and electroconductive agents such as carbon black, silver powder and conductive zinc white.

### [Method of preparing fluoropolyether-based curable composition]

The method of preparing the fluoropolyether-based curable composition is not particularly limited. The composition can be prepared by mixing the aforementioned components. Specifically, the fluoropolyether-based curable composition can be prepared by mixing components (A) and (B) and other optional components on a mixer such as a planetary mixer, loss mixer or Hobart mixer or if necessary on a kneading machine such as a kneader or three roll mill, until uniform.

Also, the composition may be of two parts, which are mixed on use.

Although the fluoropolyether-based curable composition thus prepared is curable at room temperature, the cure may be promoted by addition of a cure promoter. Even when a cure promoter is not added, it is recommended to heat the composition in order to promote the cure. The composition is preferably cured at a temperature of 60°C or higher, more preferably 80 to 200°C for a time of several minutes to several days in order that the desired rubber physical properties be obtained.

On use of the fluoropolyether-based curable composition, the composition may be dissolved in a suitable fluorinated solvent at a desired concentration, depending on a particular application or purpose. Suitable fluorinated solvents include 1,3-bis(trifluoromethyl)benzene, Fluorinert (3M), perfluorobutyl methyl ether, perfluorobutyl ethyl ether, 1,1,2,2-tetrafluoroethyl methyl ether, 1,1,2,2-tetrafluoroethyl ethyl ether, 1,1,2,2-tetrafluoroethyl 2,2,2-trifluoroethyl ether, 1,1,2,2-tetrafluoroethyl 2,2,3,3-tetrafluoropropyl ether, hexafluoroisopropyl methyl ether, 1,1,3,3,3-pentafluoro-2-trifluoromethylpropyl methyl ether, 1,1,2,3,3,3-hexafluoropropyl methyl ether, and 1,1,2,3,3,3-hexafluoropropyl ethyl ether. Particularly in the thin film application, it is preferred to use the solvent.

The fluoropolyether-based curable composition is preferably used in automobiles, ships, sports goods, LEDs, construction and building applications, chemical plants, semiconductor manufacturing lines, analytical and scientific instruments, residential environments, communication tools, communication systems, aircraft, railroad vehicles, portable instruments, power storages, robots and electric/electronic parts such as lithium ion batteries, more preferably in automobiles, ships, aircraft, sports goods, LEDs, construction and building applications, chemical plants, analytical and scientific instruments, residential environments, communication tools, communication systems, and railroad vehicles.

In particular, electric/electronic parts in which the cured product of the fluoropolyether-based curable composition is used as a gasket, packing, protective seal or coating layer are preferred.

### EXAMPLES

Synthesis Examples, Examples and Comparative Examples are given below for further illustrating the invention although the invention is not limited thereto. In Examples, parts are by weight. The viscosity is measured at 23°C by a rotational viscometer. The contents of vinyl, SiH, secondary amino and epoxy groups are measured by ¹H-NMR spectroscopy.

### [Synthesis Example 1]

A flask was charged with 200 g of a polymer having a vinyl content of 0.0320 mol/100 g, represented by formula (24), and purged with nitrogen. Then 200 g of m-xylene hexafluoride and 73.5 g (0.30 mol) of tetramethylcyclotetrasiloxane were added. With stirring, the temperature was raised to 75°C. Then 0.08 g of a toluene solution of platinum/1,3-divinyltetramethyldisiloxane complex (containing 2.1×10⁻⁶ mol of elemental Pt) was added, and stirring was continued for 4 hours. After the disappearance of vinyl group was confirmed, the solvent and excessive tetramethylcyclosiloxane were removed. On the subsequent active carbon treatment, 149.7 g of a polymer having the formula (25) was obtained.

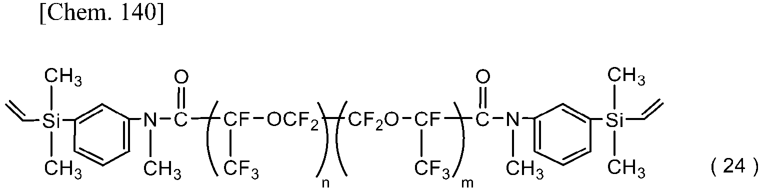

The average value of n+m is 35.

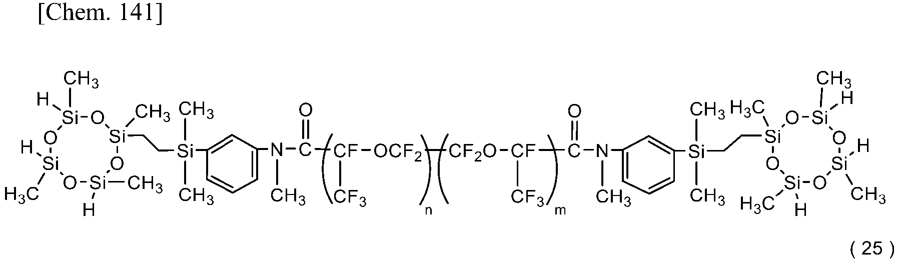

The average value of n+m is 35.

Next, another flask was charged with 145.2 g of the polymer having a SiH content of 0.0882 mol/100 g, represented by formula (25), and purged with nitrogen. To the flask, 16.11 g (0.14 mol) of allyl glycidyl ether and 145.2 g of m-xylene hexafluoride were added. With stirring, the temperature was raised to 70°C. Then 0.73 g of a toluene solution of platinum/1,3-divinyltetramethyldisiloxane complex (containing 1.87×10⁻⁵ mol of elemental Pt) was added, and stirring was continued for 1 hour. After the disappearance of SiH group was confirmed, active carbon treatment was carried out. The solvent and excessive allyl glycidyl ether were removed under reduced pressure. There was obtained 150 g of a fluorinated epoxy compound having the formula (26) in grease form. It had an epoxy content of 0.0810 mol/100 g.

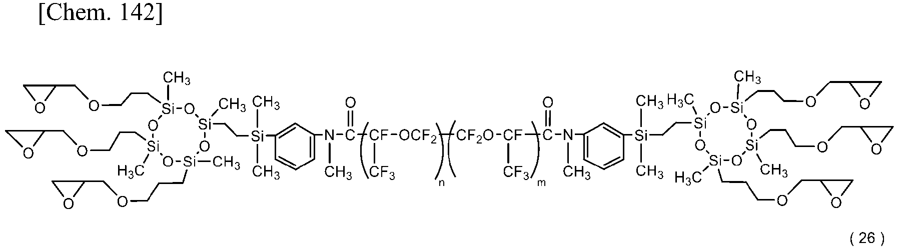

The average value of n+m is 35.

### [Synthesis Example 2]

A flask was charged with 200 g of a polymer having a vinyl content of 0.0335 mol/100 g, represented by formula (27), and purged with nitrogen. Then 200 g of m-xylene hexafluoride and 78.11 g (0.32 mol) of tetramethylcyclotetrasiloxane were added. With stirring, the temperature was raised to 75°C. Then 0.24 g of a toluene solution of platinum/1,3-divinyltetramethyldisiloxane complex (containing 6.2×10⁻⁶ mol of elemental Pt) was added, and stirring was continued for 2 hours. After the disappearance of vinyl group was confirmed, the solvent and excessive tetramethylcyclosiloxane were removed. On the subsequent active carbon treatment, 158.1 g of a polymer having the formula (28) was obtained.

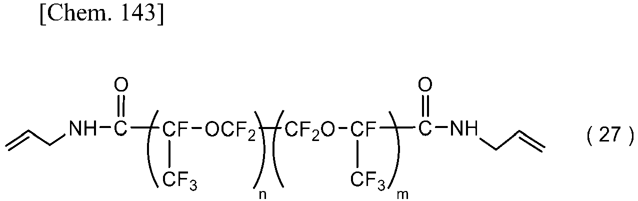

The average value of n+m is 35.

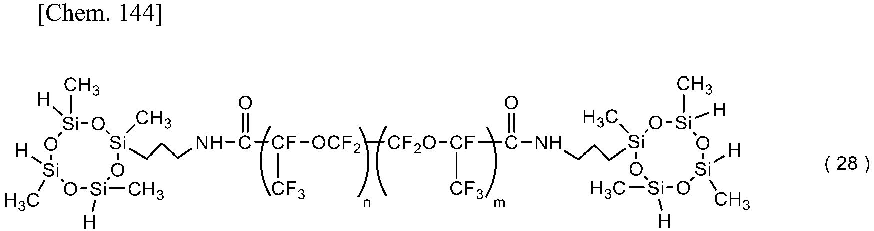

The average value of n+m is 35.

Next, another flask was charged with 155.0 g of the polymer having a SiH content of 0.0929 mol/100 g, represented by formula (28), and purged with nitrogen. To the flask, 17.8 g (0.16 mol) of allyl glycidyl ether and 155.0 g of m-xylene hexafluoride were added. With stirring, the temperature was raised to 70°C. Then 0.77 g of a toluene solution of platinum/1,3-divinyltetramethyldisiloxane complex (containing 1.97×10⁻⁵ mol of elemental Pt) was added, and stirring was continued for 1 hour. After the disappearance of SiH group was confirmed, active carbon treatment was carried out. The solvent and excessive allyl glycidyl ether were removed under reduced pressure. There was obtained 153 g of a fluorinated epoxy compound having the formula (29) in grease form. It had an epoxy content of 0.0840 mol/100 g.

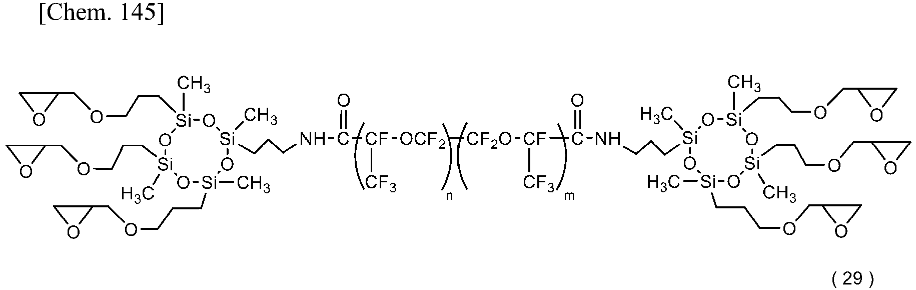

The average value of n+m is 35.

### [Synthesis Example 3]

By following the same procedure as in Synthesis Example 1 except that 17.5 g (0.14 mol) of 3-vinylcyclohexene oxide was used instead of allyl glycidyl ether, there was obtained 149 g of a fluorinated epoxy compound having the formula (30) in grease form. It had an epoxy content of 0.0803 mol/100 g.

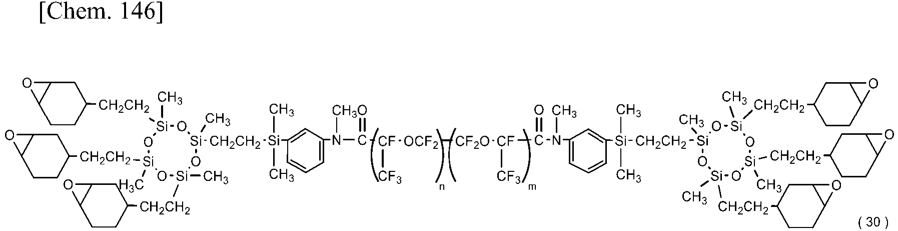

The average value of n+m is 35.

### [Synthesis Example 4]

By following the same procedure as in Synthesis Example 2 except that 19.4 g (0.16 mol) of 3-vinylcyclohexene oxide was used instead of allyl glycidyl ether, there was obtained 152 g of a fluorinated epoxy compound having the formula (31) in grease form. It had an epoxy content of 0.0833 mol/100 g.

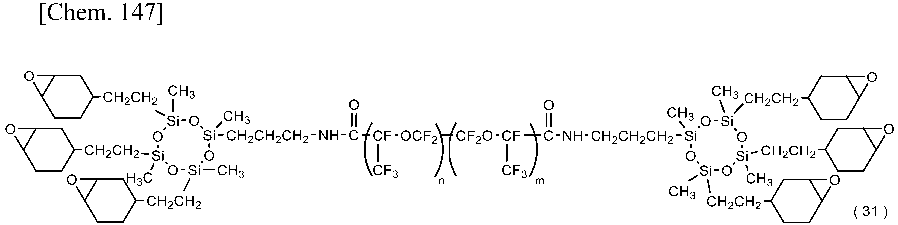

The average value of n+m is 35.

### [Synthesis Example 5]

A flask was charged with 200 g of a polymer having a vinyl content of 0.0231 mol/100 g, represented by the formula (32), and purged with nitrogen. Then 200 g of m-xylene hexafluoride and 53.77 g (0.22 mol) of tetramethylcyclotetrasiloxane were added. With stirring, the temperature was raised to 75°C. Then 0.08 g of a toluene solution of platinum/1,3-divinyltetramethyldisiloxane complex (containing 2.1×10⁻⁶ mol of elemental Pt) was added, and stirring was continued for 4 hours. After the disappearance of vinyl group was confirmed, the solvent and excessive tetramethylcyclosiloxane were removed. On the subsequent active carbon treatment, 176.1 g of a polymer having the formula (33) was obtained.

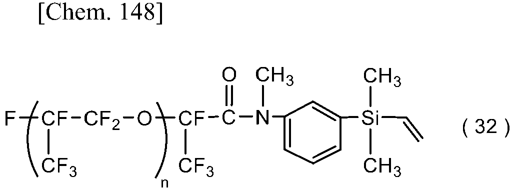

The average value of n is 24.

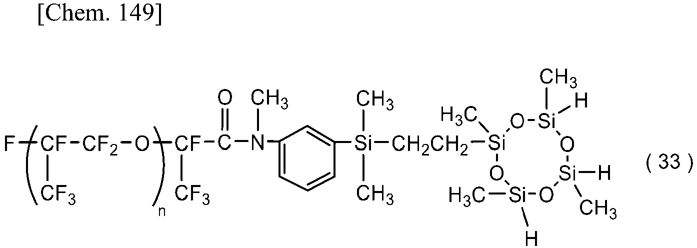

The average value of n is 24.

Next, another flask was charged with 150 g of the polymer having a SiH content of 0.0658 mol/100 g, represented by formula (33), and purged with nitrogen. To the flask, 12.57 g (0.11 mol) of allyl glycidyl ether and 150 g of m-xylene hexafluoride were added. With stirring, the temperature was raised to 70°C. Then 0.75 g of a toluene solution of platinum/1,3-divinyltetramethyldisiloxane complex (containing 1.92×10⁻⁵ mol of elemental Pt) was added, and stirring was continued for 1 hour. After the disappearance of SiH group was confirmed, active carbon treatment was carried out. The solvent and excessive allyl glycidyl ether were removed under reduced pressure. There was obtained 139 g of a fluorinated epoxy compound having the formula (34) in grease form. It had an epoxy content of 0.0612 mol/100 g.

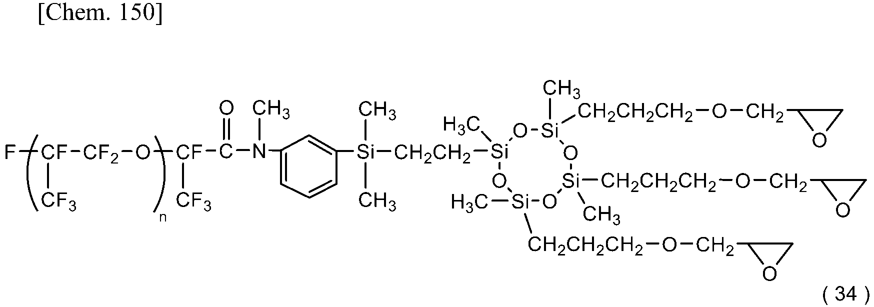

The average value of n is 24.

### [Synthesis Example 6]

A flask was charged with 200 g of a polymer having a vinyl content of 0.0239 mol/100 g, represented by formula (35), and purged with nitrogen. Then 200 g of m-xylene hexafluoride and 54.97 g (0.23 mol) of tetramethylcyclotetrasiloxane were added. With stirring, the temperature was raised to 75°C. Then 0.24 g of a toluene solution of platinum/1,3-divinyltetramethyldisiloxane complex (containing 6.2×10⁻⁶ mol of elemental Pt) was added, and stirring was continued for 4 hours. After the disappearance of vinyl group was confirmed, the solvent and excessive tetramethylcyclosiloxane were removed. On the subsequent active carbon treatment, 180 g of a polymer having the formula (36) was obtained.

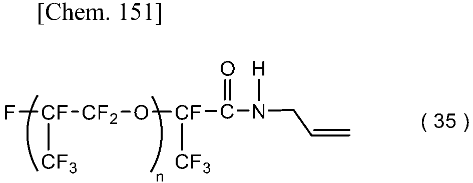

The average value of n is 24.

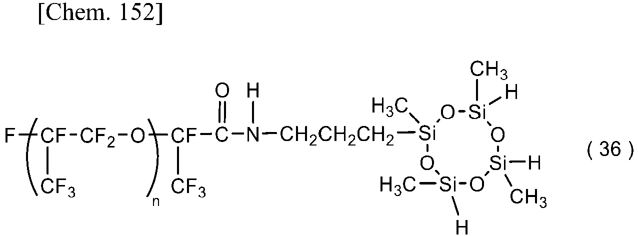

The average value of n is 24.

Next, another flask was charged with 150 g of the polymer having a SiH content of 0.0677 mol/100 g, represented by formula (36), and purged with nitrogen. To the flask, 12.92 g (0.11 mol) of allyl glycidyl ether and 150 g of m-xylene hexafluoride were added. With stirring, the temperature was raised to 70°C. Then 0.73 g of a toluene solution of platinum/1,3-divinyltetramethyldisiloxane complex (containing 1.87×10⁻⁵ mol of elemental Pt) was added, and stirring was continued for 1 hour. After the disappearance of SiH group was confirmed, active carbon treatment was carried out. The solvent and excessive allyl glycidyl ether were removed under reduced pressure. There was obtained 141 g of a fluorinated epoxy compound having the formula (37) in grease form. It had an epoxy content of 0.0629 mol/100 g.

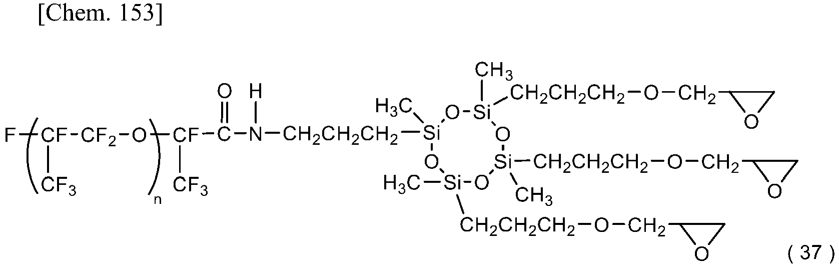

The average value of n is 24.

### [Synthesis Example 7]

A flask was charged with 200 g of a polymer having a vinyl content of 0.0335 mol/100 g, represented by formula (27), and purged with nitrogen. Then 200 g of m-xylene hexafluoride and 87.0 g (0.32 mol) of 3-[(dimethylsilyl)oxy]-1,1,3,5,5-pentamethyltrisiloxane were added. With stirring, the temperature was raised to 75°C. Then 0.24 g of a toluene solution of platinum/1,3-divinyltetramethyldisiloxane complex (containing 6.2×10⁻⁶ mol of elemental Pt) was added, and stirring was continued for 2 hours. After the disappearance of vinyl group was confirmed, the solvent and excessive 3-[(dimethylsilyl)oxy]-1,1,3,5,5-pentamethyltrisiloxane were removed. On the subsequent active carbon treatment, 160 g of a polymer having the formula (38) was obtained.

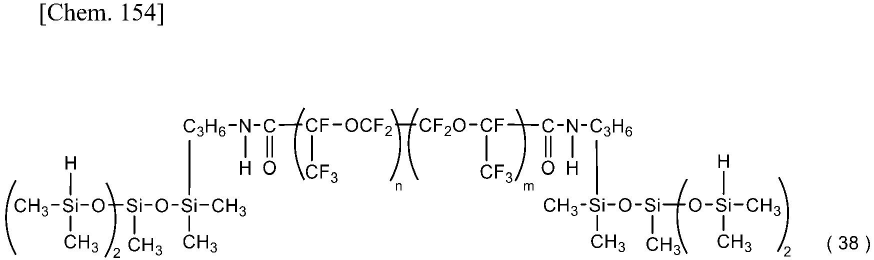

The average value of n+m is 35.

Next, another flask was charged with 150 g of the polymer having a SiH content of 0.0614 mol/100 g, represented by formula (38), and purged with nitrogen. To the flask, 11.79 g (0.10 mol) of allyl glycidyl ether and 150 g of m-xylene hexafluoride were added. With stirring, the temperature was raised to 70°C. Then 0.73 g of a toluene solution of platinum/1,3-divinyltetramethyldisiloxane complex (containing 1.87×10⁻⁵ mol of elemental Pt) was added, and stirring was continued for 1 hour. After the disappearance of SiH group was confirmed, active carbon treatment was carried out. The solvent and excessive allyl glycidyl ether were removed under reduced pressure. There was obtained 143 g of a fluorinated epoxy compound having the formula (39) in oily form. It had an epoxy content of 0.0574 mol/100 g.

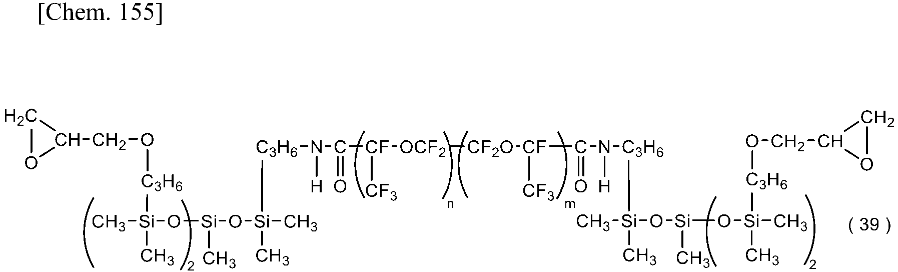

The average value of n+m is 35.

### [Synthesis Example 8]

A flask was charged with 200 g of a polymer having a vinyl content of 0.0320 mol/100 g, represented by formula (24), and purged with nitrogen. Then 200 g of m-xylene hexafluoride and 82.0 g (0.31 mol) of 3-[(dimethylsilyl)oxy]-1,1,3,5,5-pentamethyltrisiloxane were added. With stirring, the temperature was raised to 75°C. Then 0.10 g of a toluene solution of platinum/1,3-divinyltetramethyldisiloxane complex (containing 2.6×10⁻⁶ mol of elemental Pt) was added, and stirring was continued for 3 hours. After the disappearance of vinyl group was confirmed, the solvent and excessive 3-[(dimethylsilyl)oxy]-1,1,3,5,5-pentamethyltrisiloxane were removed. On the subsequent active carbon treatment, 165 g of a polymer having the formula (40) was obtained.

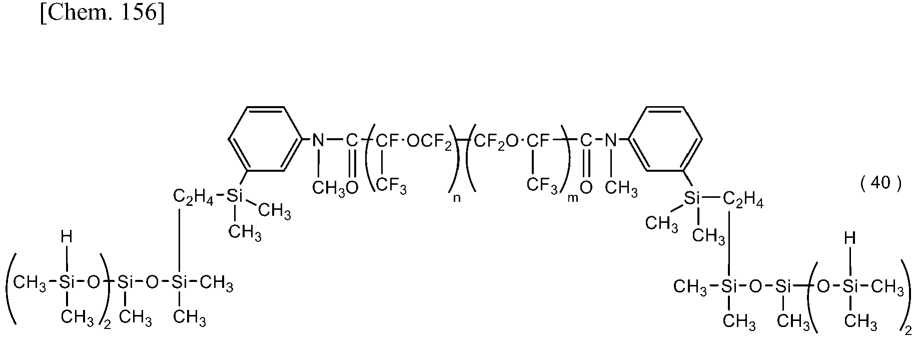

The average value of n+m is 35.

Next, another flask was charged with 150 g of the polymer having a SiH content of 0.0590 mol/100 g, represented by formula (40), and purged with nitrogen. To the flask, 11.36 g (0.10 mol) of allyl glycidyl ether and 150 g of m-xylene hexafluoride were added. With stirring, the temperature was raised to 70°C. Then 0.76 g of a toluene solution of platinum/1,3-divinyltetramethyldisiloxane complex (containing 1.94×10⁻⁵ mol of elemental Pt) was added, and stirring was continued for 1 hour. After the disappearance of SiH group was confirmed, active carbon treatment was carried out. The solvent and excessive allyl glycidyl ether were removed under reduced pressure. There was obtained 143 g of a fluorinated epoxy compound having the formula (41) in oily form. It had an epoxy content of 0.0553 mol/100 g.

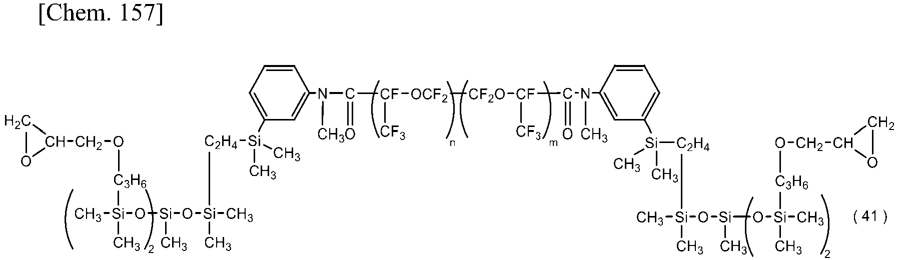

The average value of n+m is 35.

### [Synthesis Example 9]

By following the same procedure as in Synthesis Example 7 except that 12.8 g (0.10 mol) of 3-vinylcyclohexene oxide was used instead of allyl glycidyl ether, there was obtained 140 g of a fluorinated epoxy compound having the formula (42) in oily form. It had an epoxy content of 0.0571 mol/100 g.

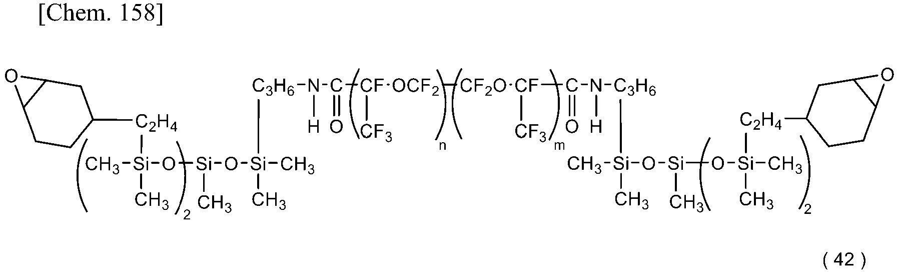

The average value of n+m is 35.

### [Example 1]

A fluoropolyether-based curable composition was obtained by mixing (A1) 90 parts of a polymer having the formula (43) (viscosity 4,900 mPa·s, content of secondary amino group at polymer end 0.0296 mol/100 g) and (A2) 10 parts of a polymer having the formula (44) (viscosity 24,920 mPa·s, content of secondary amino group at polymer end 0.0301 mol/100 g), adding (B1) 43.1 parts of the fluorinated epoxy compound having an epoxy content of 0.0810 mol/100 g, represented by formula (26), thereto, and mixing.

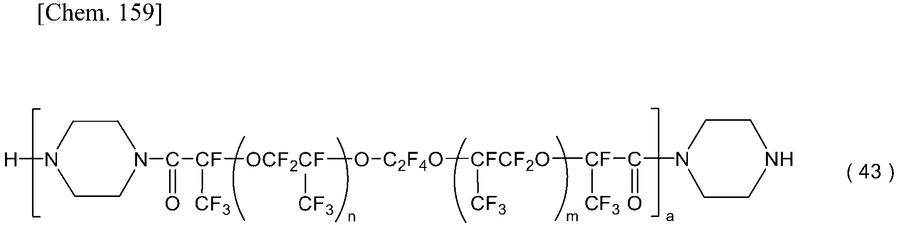

The average value of "a" is 1.03 and the average value of n+m is 35.

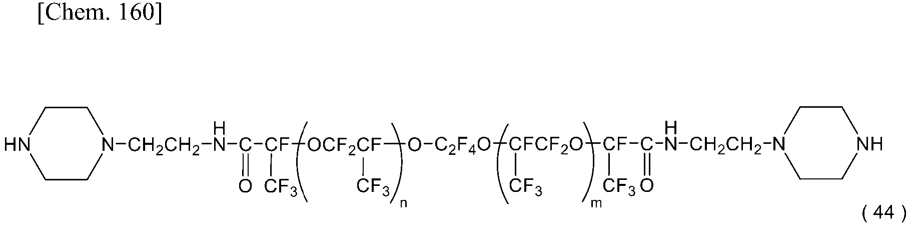

The average value of n+m is 35.

### [Example 2]

A fluoropolyether-based curable composition was obtained by the same procedure as in Example 1 aside from using (A1) 60 parts of the polymer having formula (43), (A2) 40 parts of the polymer having formula (44), and (B1) 43.3 parts of the fluorinated epoxy compound having formula (26).

### [Example 3]

A fluoropolyether-based curable composition was obtained by the same procedure as in Example 1 aside from using (A1) 40 parts of the polymer having formula (43), (A2) 60 parts of the polymer having formula (44), and (B1) 43.5 parts of the fluorinated epoxy compound having formula (26).

### [Example 4]

A fluoropolyether-based curable composition was obtained by the same procedure as in Example 1 aside from using (A1) 100 parts of the polymer having formula (43) and (B1) 43.0 parts of the fluorinated epoxy compound having formula (26).

### [Example 5]

A fluoropolyether-based curable composition was obtained by the same procedure as in Example 1 aside from using (A2) 100 parts of the polymer having formula (44) and (B1) 43.8 parts of the fluorinated epoxy compound having formula (26).

### [Example 6]

A fluoropolyether-based curable composition was obtained by the same procedure as in Example 1 aside from using (B2) 42.7 parts of a fluorinated epoxy compound having an epoxy content of 0.0840 mol/100 g, represented by formula (29), instead of (B1) the fluorinated epoxy compound.

### [Example 7]

A fluoropolyether-based curable composition was obtained by the same procedure as in Example 4 aside from using (B2) 43.3 parts of the fluorinated epoxy compound having formula (29) instead of (B1) the fluorinated epoxy compound.

### [Example 8]

A fluoropolyether-based curable composition was obtained by the same procedure as in Example 1 aside from using (B3) 43.3 parts of a fluorinated epoxy compound having an epoxy content of 0.0803 mol/100 g, represented by formula (30), instead of (B1) the fluorinated epoxy compound.

### [Example 9]

A fluoropolyether-based curable composition was obtained by the same procedure as in Example 4 aside from using (B3) 43.9 parts of the fluorinated epoxy compound represented by formula (30) instead of (B1) the fluorinated epoxy compound.

### [Example 10]

A fluoropolyether-based curable composition was obtained by the same procedure as in Example 1 aside from using (B4) 42.8 parts of a fluorinated epoxy compound having an epoxy content of 0.0833 mol/100 g, represented by formula (31) instead of (B1) the fluorinated epoxy compound.

### [Example 11]

A fluoropolyether-based curable composition was obtained by the same procedure as in Example 1 aside from using (B5) 33.0 parts of a fluorinated epoxy compound having an epoxy content of 0.1103 mol/100 g, represented by the formula (45) instead of (B1) the fluorinated epoxy compound.

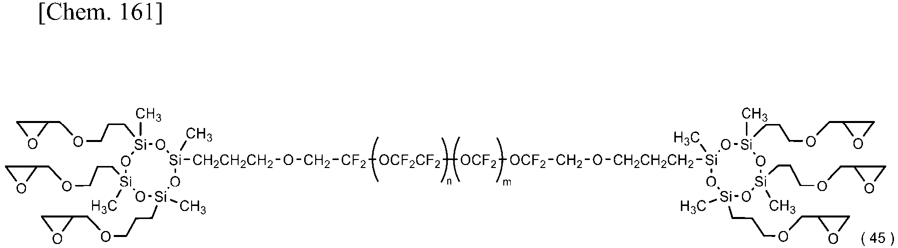

Herein n/m = 0.9 and n+m = 45.

### [Example 12]

A fluoropolyether-based curable composition was obtained by the same procedure as in Example 4 aside from using (B5) 32.9 parts of the fluorinated epoxy compound represented by formula (45) instead of (B1) the fluorinated epoxy compound.

### [Example 13]

A fluoropolyether-based curable composition was obtained by the same procedure as in Example 4 aside from using (B6) 60.7 parts of a fluorinated epoxy compound having an epoxy content of 0.0612 mol/100 g, represented by formula (34) instead of (B1) the fluorinated epoxy compound.

### [Example 14]

A fluoropolyether-based curable composition was obtained by the same procedure as in Example 4 aside from using (B7) 60.0 parts of a fluorinated epoxy compound having an epoxy content of 0.0629 mol/100 g, represented by formula (37) instead of (B1) the fluorinated epoxy compound.

### [Example 15]

A fluoropolyether-based curable composition was obtained by the same procedure as in Example 1 aside from using (B8) 62.7 parts of a fluorinated epoxy compound having an epoxy content of 0.0574 mol/100 g, represented by formula (39) instead of (B1) the fluorinated epoxy compound.

### [Example 16]

A fluoropolyether-based curable composition was obtained by the same procedure as in Example 4 aside from using (B8) 62.8 parts of the fluorinated epoxy compound represented by formula (39) instead of (B1) the fluorinated epoxy compound.

### [Example 17]

A fluoropolyether-based curable composition was obtained by the same procedure as in Example 1 aside from using (B9) 62.0 parts of a fluorinated epoxy compound having an epoxy content of 0.0553 mol/100 g, represented by formula (41) instead of (B1) the fluorinated epoxy compound.

### [Example 18]

A fluoropolyether-based curable composition was obtained by the same procedure as in Example 4 aside from using (B9) 62.1 parts of the fluorinated epoxy compound represented by formula (41) instead of (B1) the fluorinated epoxy compound.

### [Example 19]

A fluoropolyether-based curable composition was obtained by the same procedure as in Example 1 aside from using (B10) 62.9 parts of a fluorinated epoxy compound having an epoxy content of 0.0571 mol/100 g, represented by formula (42), instead of (B1) the fluorinated epoxy compound.

### [Example 20]

A fluoropolyether-based curable composition was obtained by the same procedure as in Example 4 aside from using (B10) 63.0 parts of the fluorinated epoxy compound represented by formula (42) instead of (B1) the fluorinated epoxy compound.

### [Comparative Example 1]

A fluoropolyether-based curable composition was obtained by the same procedure as in Example 1 aside from using (B11) 2.74 parts of an epoxy compound represented by the formula (46) instead of (B1) the fluorinated epoxy compound.

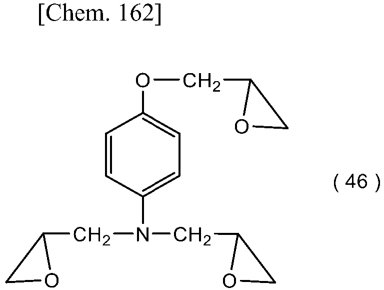

### [Comparative Example 2]

A fluoropolyether-based curable composition was obtained by the same procedure as in Example 4 aside from using (B11) 2.73 parts of the epoxy compound represented by formula (28) instead of (B1) the fluorinated epoxy compound.

### [Comparative Example 3]

A fluoropolyether-based curable composition was obtained by the same procedure as in Example 5 aside from using (B11) 2.78 parts of the epoxy compound represented by formula (28) instead of (B1) the fluorinated epoxy compound.

### <Measurement of pot life at room temperature>

Each composition was allowed to stand in a thermostatic chamber at 25°C for 2, 4, 8, 16 and 24 hours under visual observation. The time passed until the flow of the composition was lost was measured. The results are shown in Tables 1 to 3.

### [Evaluation criterion]

○: remain flowable
△: not flowable though not cured
×: cured

**[Table 1]**

| | Standing time (hr) | Example 1 | Example 2 | Example 3 | Example 4 | Example 5 | Example 6 | Example 7 | Example 8 |
|---|---|---|---|---|---|---|---|---|---|
| | 2 | ○ | ○ | ○ | ○ | ○ | ○ | ○ | ○ |
| | 4 | ○ | ○ | ○ | ○ | ○ | ○ | ○ | ○ |
| State of composition | 8 | ○ | ○ | ○ | ○ | ○ | ○ | ○ | ○ |
| | 16 | ○ | ○ | △ | ○ | △ | ○ | ○ | △ |
| | 24 | △ | △ | △ | △ | × | △ | △ | × |

**[Table 2]**

| | Standing time (hr) | Example 9 | Example 10 | Example 11 | Example 12 | Example 13 | Example 14 | Example 15 | Example 16 |
|---|---|---|---|---|---|---|---|---|---|
| | 2 | ○ | ○ | ○ | ○ | ○ | ○ | ○ | ○ |
| | 4 | ○ | ○ | ○ | ○ | ○ | ○ | ○ | ○ |
| State of composition | 8 | ○ | ○ | ○ | ○ | ○ | ○ | ○ | ○ |
| | 16 | △ | △ | △ | ○ | ○ | ○ | ○ | ○ |
| | 24 | × | × | × | △ | △ | △ | △ | △ |

**[Table 3]**

| | Standing time (hr) | Example 17 | Example 18 | Example 19 | Example 20 | Comparative Example 1 | Comparative Example 2 | Comparative Example 3 |
|---|---|---|---|---|---|---|---|---|
| | 2 | ○ | ○ | ○ | ○ | ○ | ○ | △ |
| | 4 | ○ | ○ | ○ | ○ | ○ | ○ | △ |
| State of composition | 8 | ○ | ○ | ○ | ○ | ○ | ○ | × |
| | 16 | ○ | ○ | △ | △ | △ | △ | × |
| | 24 | △ | △ | × | × | × | × | × |

The fluoropolyether-based curable compositions of Examples 1 to 20 using the fluorinated epoxy compound as component (B) remained flowable over about 8 to 16 hours at 25°C. The compositions of Comparative Examples 1 to 3 using the same component (A) as in Examples 1, 4 and 5 showed a shorter pot life than Examples 1, 4 and 5.

### <Preparation of fluoropolyether-based cured product and evaluation of physical properties thereof>

Each of the fluoropolyether-based curable compositions of Examples 1 to 20 and Comparative Examples 1 to 3 immediately after preparation was cast into a stainless steel mold of 2 mm thick rested on a Teflon (registered trademark, hereinafter) sheet, covered with another Teflon sheet, and press cured at 100°C for 6 hours. After the press cure, the stainless steel mold of 2 mm thick was taken off. The resulting fluoropolyether-based cured product was evaluated for physical properties according to JIS K6249. The results are shown in Table 4.

**[Table 4]**

| | Hardness (Durometer A) | Tensile strength (MPa) | Elongation at break (%) |
|---|---|---|---|
| Example 1 | 40 | 2.1 | 250 |
| Example 2 | 42 | 2.2 | 220 |
| Example 3 | 44 | 2.3 | 220 |
| Example 4 | 40 | 2.0 | 250 |
| Example 5 | 48 | 2.6 | 210 |
| Example 6 | 41 | 2.3 | 230 |
| Example 7 | 42 | 2.3 | 240 |
| Example 8 | 42 | 2.2 | 210 |
| Example 9 | 42 | 2.2 | 200 |
| Example 10 | 44 | 2.3 | 200 |
| Example 11 | 42 | 2.3 | 200 |
| Example 12 | 43 | 2.3 | 210 |
| Example 13 | 44 | 2.2 | 200 |
| Example 14 | 44 | 2.2 | 190 |
| Example 15 | 35 | 1.8 | 290 |
| Example 16 | 35 | 1.8 | 290 |
| Example 17 | 36 | 1.9 | 280 |
| Example 18 | 37 | 1.9 | 270 |
| Example 19 | 40 | 2.0 | 250 |
| Example 20 | 40 | 2.0 | 240 |
| Comparative Example 1 | 58 | 2.9 | 180 |
| Comparative Example 2 | 57 | 2.9 | 180 |
| Comparative Example 3 | 64 | 3.6 | 160 |

All the fluoropolyether-based curable compositions of Examples 1 to 20 using fluorinated epoxy compounds (B1) to (B10) as component (B) gave cured products having satisfactory rubber elasticity. As compared with these cured products, the cured products of the fluoropolyether-based curable compositions of Comparative Examples 1 to 3 using fluorine-free epoxy compound (B11) as component (B) had high hardness and poor rubber elasticity.

The foregoing results demonstrate that the fluoropolyether-based curable compositions of Examples 1 to 20 have a long pot life and their cured products are soft and show excellent rubber elasticity.

## Claims

1. A fluoropolyether-based curable composition comprising:
(A) a fluorinated compound having at least two secondary amino groups per molecule and containing a divalent perfluoropolyether group in the backbone, and
(B) a fluorinated compound having at least two epoxy groups per molecule and containing a mono- or divalent perfluoropolyether group in the backbone, in such an amount as to provide 0.5 to 5 moles of epoxy groups in component (B) per mole of secondary amino groups in component (A).

2. The fluoropolyether-based curable composition of claim 1 wherein component (A) is a fluorinated compound having the average formula (1): 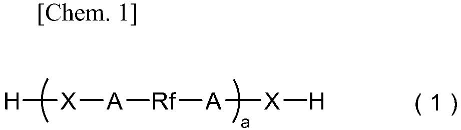 wherein Rf is independently a divalent perfluoropolyether group, A is independently a carbonyl bond, or a C₁-C₁₂ divalent organic group which may contain at least one moiety selected from amide bond, ether bond and ester bond, X is independently a group having any one of the formulae (2) to (4): 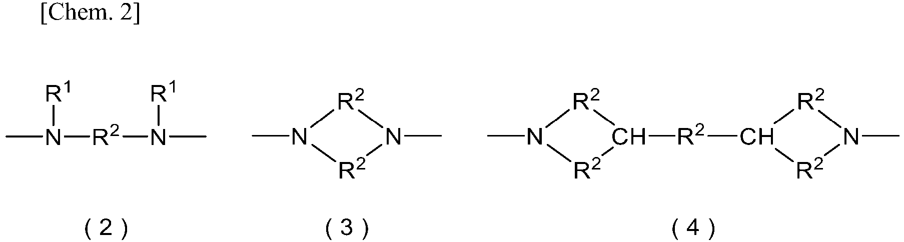 wherein R¹ is independently a substituted or unsubstituted monovalent hydrocarbon group, and R² is independently a substituted or unsubstituted divalent hydrocarbon group, and "a" is a positive number of at least 1.

3. The fluoropolyether-based curable composition of claim 2 wherein in average formula (1), A is independently a group selected from -(CH₂)_{f}-*, -(CH₂)_{f}OCH₂-*, -CO-*, -(CH₂)_{f}-NR⁶-CO-*, -(CH₂)_{f}-O-CO-*, and groups having the general formulae (5) and (6): 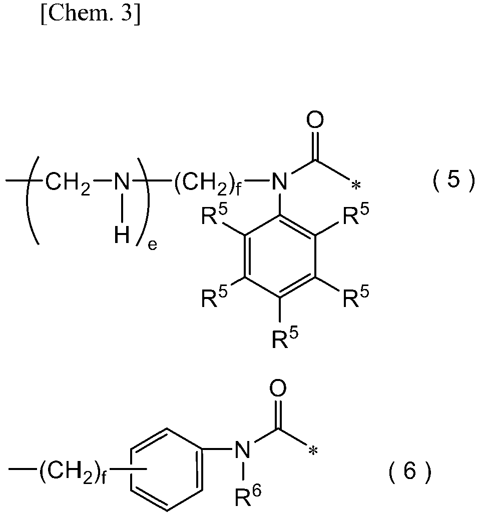 wherein R⁵ is independently hydrogen, fluorine, methyl, ethyl or trifluoromethyl, R⁶ is hydrogen, methyl, ethyl, isopropyl or phenyl, e is 0 or 1, and f is an integer of 1 to 9,
-* designates a point of attachment to Rf and - designates a point of attachment to X.

4. The fluoropolyether-based curable composition of claim 1 wherein component (B) is a fluorinated compound having the general formula (7): 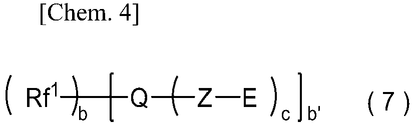 wherein Rf¹ is independently a mono- or divalent group of fluoropolyether structure having a number average molecular weight of 400 to 40,000; when Rf¹ is monovalent, b' is 1, b is an integer of 1 to 6, and c is an integer of 2 to 20; when Rf¹ is divalent, b' is 2, b is 1, and c is an integer of 1 to 20; Q is independently a (b+c)-valent group containing at least (b+c) number of Si atoms, which has a siloxane structure, silalkylene structure, silarylene structure, or a combination thereof, and may have a cyclic structure, Z is independently a C₁-C₂₀ divalent hydrocarbon group which may contain an ether bond or ester bond and may have a cyclic structure, and E is independently a group having the formula (I) or (II): 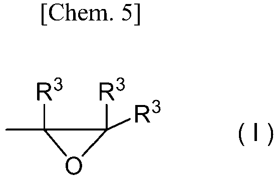 wherein R³ is independently hydrogen or a C₁-C₂₀ substituted or unsubstituted monovalent hydrocarbon group which may contain an ether bond or ester bond and may have a cyclic structure, 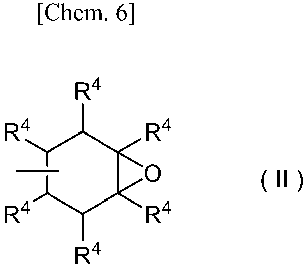 wherein R⁴ is independently hydrogen or a C₁-C₂₀ substituted or unsubstituted monovalent hydrocarbon group.

5. The fluoropolyether-based curable composition of claim 4 wherein in formula (7), Z is independently selected from groups of the following formulae:
-CH₂CH₂-*,
-CH₂CH₂CH₂-*,
-CH₂CH₂CH₂CH₂-*,
-CH₂CH₂CH₂CH₂CH₂-*,
-CH₂CH₂CH₂CH_{2C}H₂CH₂-*,
-CH₂CH₂CH₂CH₂CH₂CH₂CH₂-*,
-CH₂CH₂CH₂CH₂CH₂CH₂CH₂CH₂-*,
-CH₂CH₂CH₂OCH₂-*,
-CH₂CH₂CH₂OCH₂CH₂OCH₂-*,
and
-CH₂CH₂CH₂OCH₂CH₂OCH₂CH₂OCH₂CH₂-*,
wherein -* designates a point of attachment to E and - designates a point of attachment to Q.

6. The fluoropolyether-based curable composition of claim 4 wherein in formula (7), the structure represented by -Z-E is selected from groups having the formulae (a) to (d): 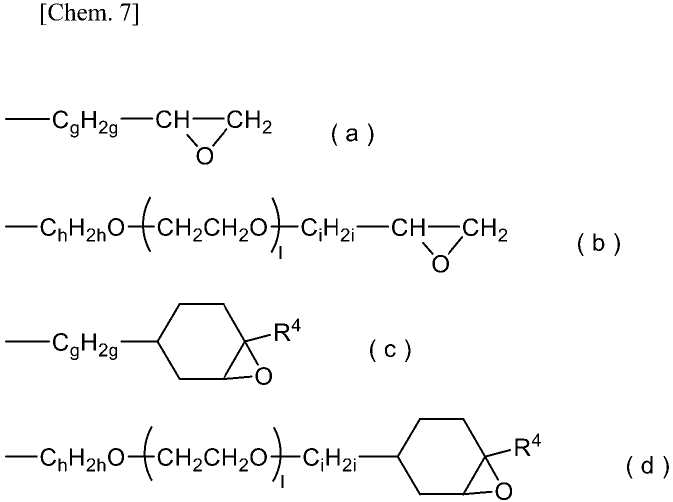 wherein g is an integer of 1 to 20, h is an integer of 1 to 10, i is an integer of 1 to 5, I is an integer of 0 to 9, h+2I+i is 2 to 20, and R⁴ is hydrogen or a C₁-C₂₀ substituted or unsubstituted monovalent hydrocarbon group.

7. The fluoropolyether-based curable composition of claim 4 wherein in formula (7), the structure represented by -Z-E is selected from groups having the following formulae.

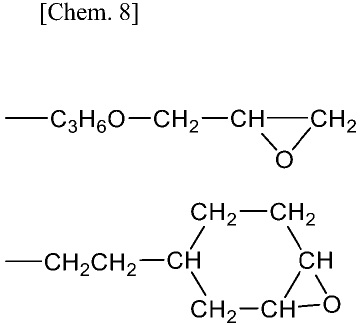

8. The fluoropolyether-based curable composition of claim 4 wherein in formula (7), Q is a group represented by any one of the following formulae: 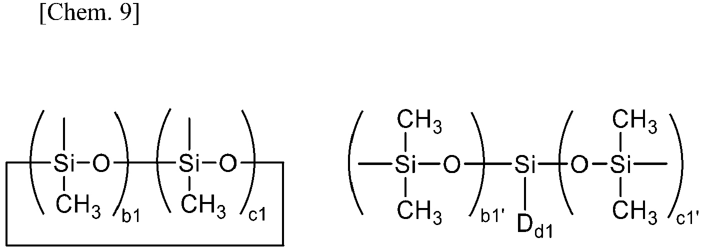 wherein b1 is an integer of 1 to 4 when Rf¹ is monovalent, b1 is 1 when Rf¹ is divalent, c1 is an integer of 2 to 4, b1+c1 is an integer of 3 to 6, b1' is 1 or 2 when Rf¹ is monovalent, b1' is 1 when Rf¹ is divalent, c1' is 2 or 3, d1 is 0 or 1, b1'+c1'+d1 = 4, D is a C₁-C₆ monovalent hydrocarbon group, each silicon atom in the units within parentheses having b1 number and b1' number of repetitions is bonded to Rf¹, each silicon atom in the units within parentheses having c1 number and c1' number of repetitions is bonded to Z, and the units within parentheses may be randomly arranged.

9. A cured product obtained by curing the fluoropolyether-based curable composition of any one of claims 1 to 8.

10. An article comprising the cured product of claim 9.

11. The article of claim 10 which is used in automobiles, ships, aircraft, sports goods, LEDs, construction and building applications, chemical plants, analytical and scientific instruments, residential environments, communication tools, communication systems, and railroad vehicles.
